# EUROPEAN PATENT SPECIFICATION

(11) **EP 4 467 374 B1**
(45) Date of publication and mention of the grant of the patent: **29.04.2026**
(21) Application number: 23174521.7
(22) Date of filing: 22.05.2023
(51) Int. Cl.: B60K 35/10, B60K 35/22, B60K 35/28, B60K 35/53, B60K 35/60

(54) **DISPLAY APPARATUS FOR VEHICLE AND METHOD OF CONTROLLING THE SAME**
ANZEIGEVORRICHTUNG FÜR EIN FAHRZEUG UND VERFAHREN ZUR STEUERUNG DAVON
APPAREIL D'AFFICHAGE POUR VÉHICULE ET SON PROCÉDÉ DE COMMANDE

(43) Date of publication of application: 27.11.2024
(73) Proprietor: Hyundai Mobis Co., Ltd., Seoul 06141 (KR)
(72) Inventor: CHOI, Jong Wan, 16891 Yongin-si, Gyeonggi-do (KR)
(74) Representative: Frenkel, Matthias Alexander

(56) References cited:
- EP-A1- 3 040 230
- DE-A1- 102019 206 935
- DE-B3- 102021 118 524

## Description

### BACKGROUND

### FIELD

Exemplary embodiments of the present disclosure relate to a display apparatus for a vehicle and a method of controlling the same, and more particularly, to a display apparatus for a vehicle in which the height of the display apparatus that protrudes upward from a cockpit in a swivel moving way can be adjusted in multiple stages, and a method of controlling the same.

### DISCUSSION OF THE BACKGROUND

A display apparatus for a vehicle is one of apparatuses for securing a driver's convenience. A display for audio/video is mounted on a cockpit that is installed at the front of the room of a vehicle.

A pop-up type display apparatus appears and disappears perpendicularly in the cockpit of a vehicle. When the display apparatus is not used, in order for the display apparatus to be fully received in the cockpit, a receiving space within the cockpit needs to be sufficiently secured to the height or more of the display apparatus.

When the pop-up type display apparatus is applied to a vehicle, the utilization of the interior space of the vehicle is reduced because the thickness of the cockpit is inevitably increased. For this reason, a large-sized display apparatus cannot be implemented in a pop-up type. Accordingly, there is a need to improve such a problem.

The background technology of the present disclosure is disclosed in Korean Patent No. 10-2335522 (December 1, 2021, entitled "POP-UP CONSOLE FOR THE VEHICLE"). EP 3 040 230 A1 discloses a display apparatus for a vehicle including a display part installed at a front surface of a center fascia of the vehicle to display an image, a housing for supporting the display part, and a driving part for moving the housing in a upper side and a lower side direction with respect to the center fascia. DE 10 2021 118524 B3 discloses a display system comprising a display device with a flexible screen film and a screen carrier to which the flexible screen film is attached, and a housing with a housing interior for at least partially accommodating the display device, wherein the display device moves between several usage positions through a housing opening of the housing, the screen support is provided with a first inherent rigidity at least in a first support section, by means of which it is bendable and/or foldable, guide rails fixed to the housing and curved in the interior of the housing are provided, by means of which a curved movement path is predetermined for the screen carrier, and the carrier section has guide elements movably mounted on the rear side along the guide rails. DE 10 2019 206935 A1 discloses a display device for displaying pixel-based display content, comprising a flexible screen device and a swivel mechanism which is designed to move the screen device as a function of a control signal between a stowed position, in which the screen device is stowed bent along an arc of a circle in a housing, and a position of use, in which the screen device projects at least partially out of the housing, wherein the swivel mechanism has a motor and a swivel arm, which is mounted with one end region rotatably on a foot region of the screen device and with an opposite end region pivotably about an axis of rotation and is designed to receive a torque from the motor and thereby to move the foot region along the arc of a circle, the radius of which corresponds to a length of the swivel arm.

### SUMMARY

The invention is defined by the appended claims.

According to the display apparatus for a vehicle according to an embodiment of the present invention, since the display unit is moved in the cockpit part in a swivel moving way, a space that is used to receive the display unit within the cockpit part can be reduced and the utilization of an interior space of the vehicle can be improved.

Furthermore, according to the present invention, since a receiving space within the cockpit part can be reduced, an increase in the size of the display unit can be implemented while not increasing the thickness of the cockpit part.

Furthermore, according to the present invention, a phenomenon in which a screen is crushed or distorted can be reduced because a front surface from which various types of information or content are output in the plurality of display parts is formed of a plane.

Furthermore, according to the present invention, driving convenience along with relaxation convenience can be improved and a danger of an accident can be reduced because a specific mode can be selected among a plurality of display modes depending on a situation.

Furthermore, according to the present invention, since the display unit can be manipulated in a contactless way, the occurrence of a health and hygiene problem, such as a virus infection attributable to direct contact with the display unit, can be reduced.

### BRIEF DESCRIPTION OF THE DRAWINGS

FIG. 1 is a front perspective view schematically illustrating a display apparatus for a vehicle according to an embodiment of the present invention.
FIG. 2 is a perspective view schematically illustrating the display apparatus for a vehicle according to an embodiment of the present invention.
FIG. 3 is a lateral cross-sectional view schematically illustrating the display apparatus for a vehicle according to an embodiment of the present invention.
FIG. 4 is a lateral cross-sectional view schematically illustrating the state in which a display unit is rotated in a cockpit part in an embodiment of the present invention.
FIG. 5 is a front view schematically illustrating the display apparatus for a vehicle in a reduction mode in an embodiment of the present invention.
FIG. 6 is a diagram schematically illustrating a cross section taken along line A-A' in FIG. 5.
FIG. 7 is a diagram schematically illustrating a cross section taken along line B-B' in FIG. 5.
FIG. 8 is a diagram illustrating the protruding height of the display unit in the reduction mode in an embodiment of the present invention.
FIG. 9 is a diagram illustrating the deployment of a screen area of the display unit in the reduction mode in an embodiment of the present invention.
FIG. 10 is an exemplary diagram of information that is displayed in a screen area of the display unit in the reduction mode in an embodiment of the present invention.
FIG. 11 is a front view schematically illustrating the display apparatus for a vehicle in a standard mode in an embodiment of the present invention.
FIG. 12 is a diagram schematically illustrating a cross section taken along line C-C' in FIG. 11.
FIG. 13 is a diagram illustrating the protruding height of the display unit in the standard mode in an embodiment of the present invention.
FIG. 14 is a diagram illustrating the deployment of the screen area of the display unit in the standard mode in an embodiment of the present invention.
FIG. 15 is an exemplary diagram of information that is displayed in the screen area of the display unit in the standard mode in an embodiment of the present invention.
FIG. 16 is a front view schematically illustrating the display apparatus for a vehicle in an extension mode in an embodiment of the present invention.
FIG. 17 is a diagram schematically illustrating a cross section taken along line D-D' in FIG. 16.
FIG. 18 is a diagram illustrating the protruding height of the display unit in the extension mode in an embodiment of the present invention.
FIG. 19 is a diagram illustrating the deployment of the screen area of the display unit in the extension mode in an embodiment of the present invention.
FIG. 20 is an exemplary diagram of information that is displayed in the screen area of the display unit in the extension mode in an embodiment of the present invention.
FIG. 21 is a block diagram illustrating a control flow in an embodiment of the present invention.
FIG. 22 is a diagram illustrating an operating state of an air gesture detection part in the display apparatus for a vehicle according to an embodiment of the present invention.
FIG. 23 is a block diagram illustrating a control flow of the air gesture detection part according to an embodiment of the present invention.
FIG. 24 is a diagram illustrating a control flow in the state in which the start-up of a vehicle has become on in the display apparatus for a vehicle according to an embodiment of the present invention.
FIG. 25 is a diagram illustrating a control flow when a vehicle is in a night driving state in the display apparatus for a vehicle according to an example not falling within the claimed scope of the present invention.
FIG. 26 is a diagram illustrating a control flow when a vehicle is in a sports driving mode in the display apparatus for a vehicle according to an example not falling within the claimed scope of the present invention.
FIG. 27 is a diagram illustrating a control flow when a vehicle is in an autonomous driving mode in the display apparatus for a vehicle according to an embo example not falling within the claimed scope diment of the present invention.
FIG. 28 is a diagram illustrating a control flow when a vehicle is in a charging mode in the display apparatus for a vehicle according to an example not falling within the claimed scope of the present invention.
FIG. 29 is a diagram illustrating a control flow when a vehicle is in an auto camping mode in the display apparatus for a vehicle according to an example not falling within the claimed scope of the present invention.

### DETAILED DESCRIPTION OF THE ILLUSTRATED EMBODIMENTS

Hereinafter, a display apparatus for a vehicle and a method of controlling the same will be described below with reference to the accompanying drawings through various exemplary embodiments. In this process, the thicknesses of lines or the sizes of elements illustrated in the drawings may have been exaggerated for the clarity of a description and for convenience' sake.

Furthermore, terms to be described below have been defined by taking into consideration their functions in the present invention, and may be changed depending on a user or operator's intention or practice. Accordingly, such terms should be defined based on the overall contents of this specification.

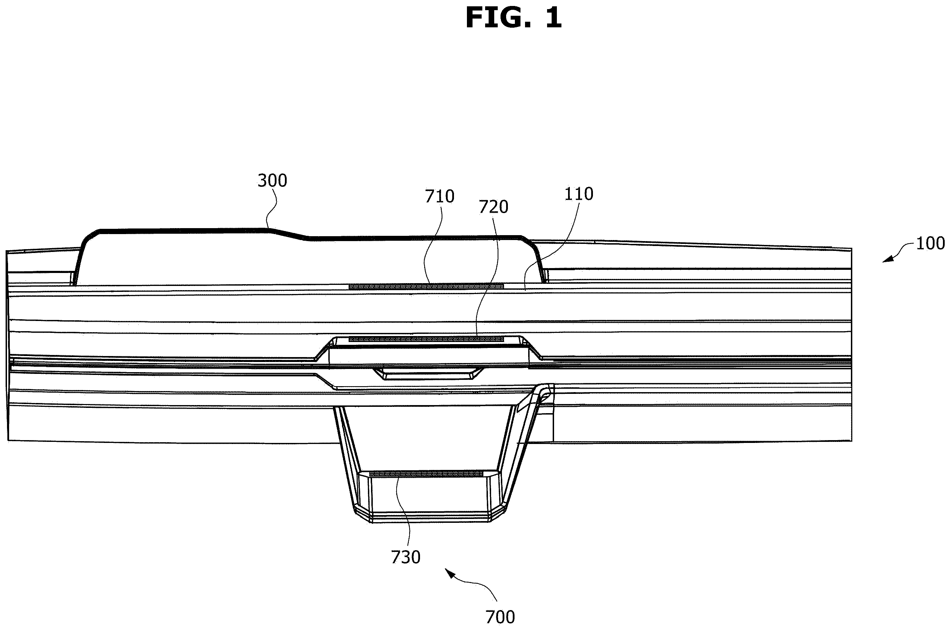

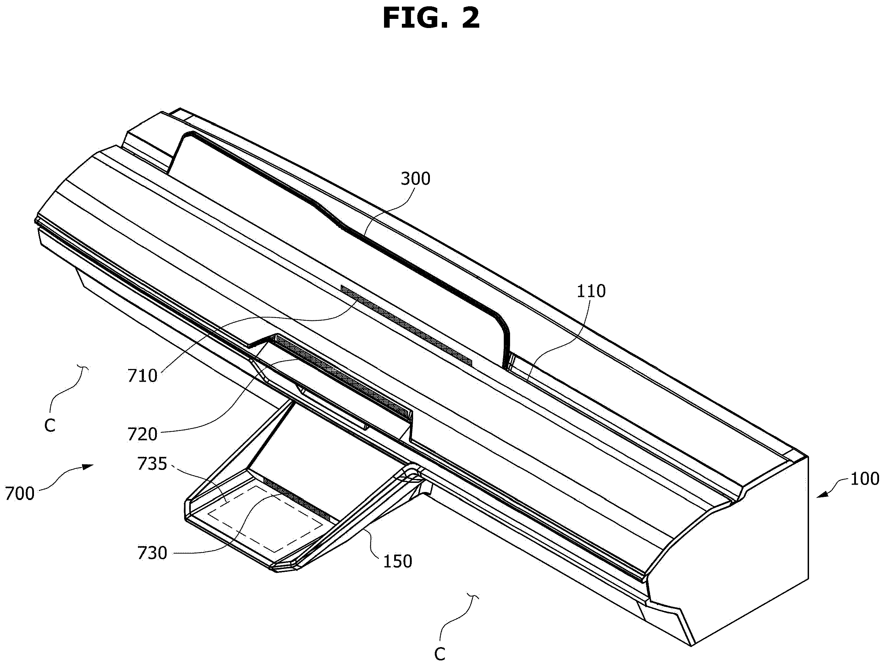

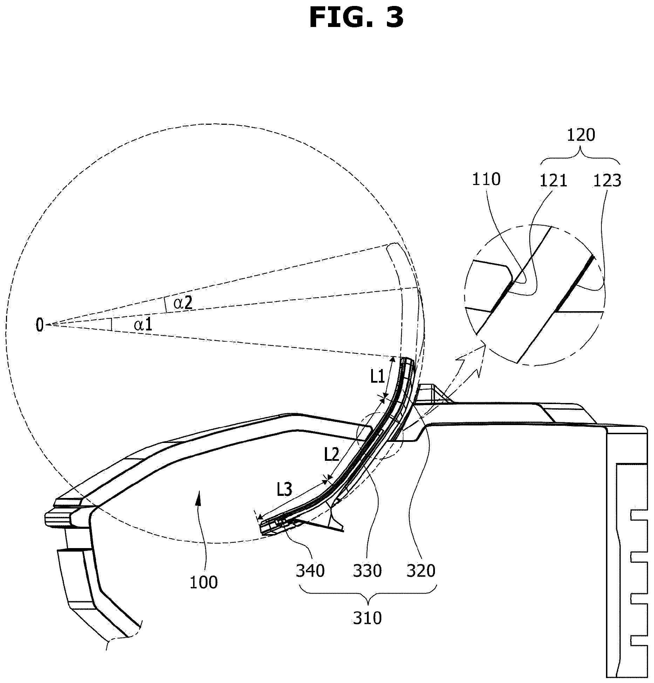

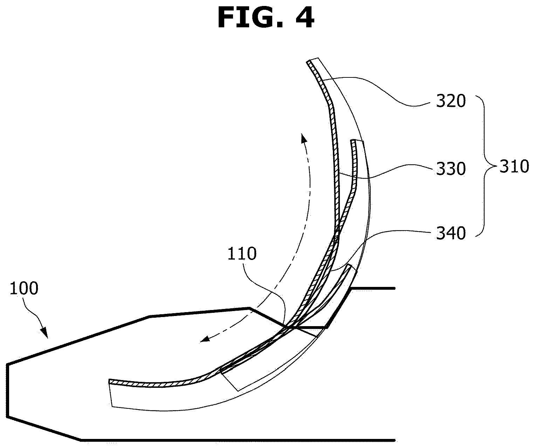

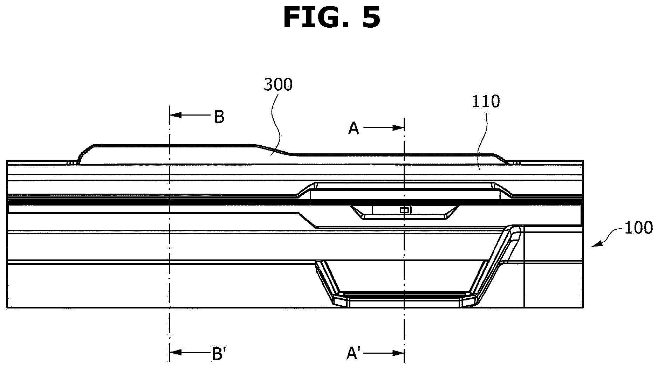

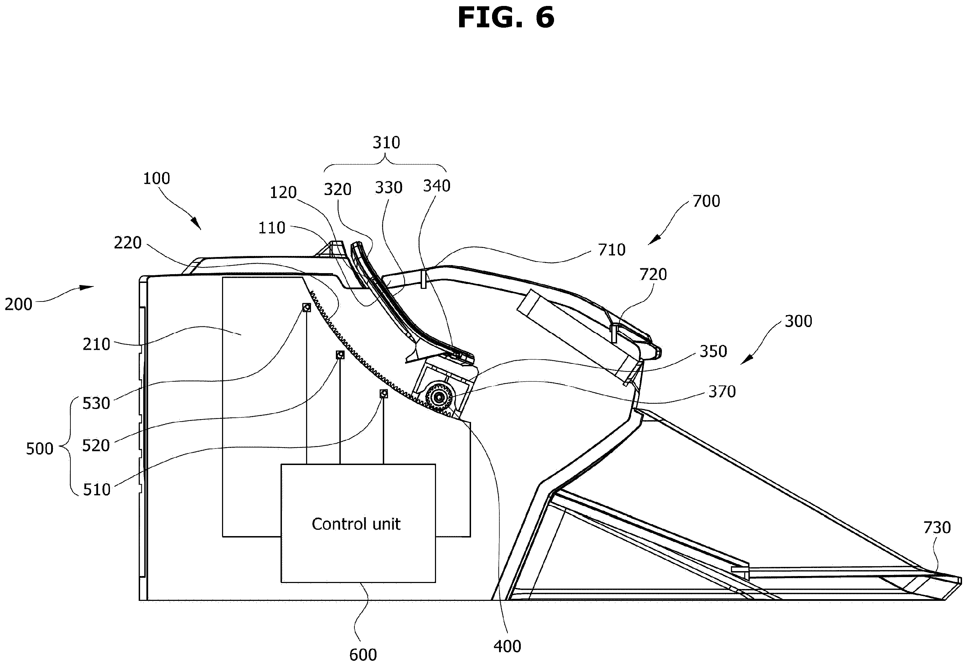

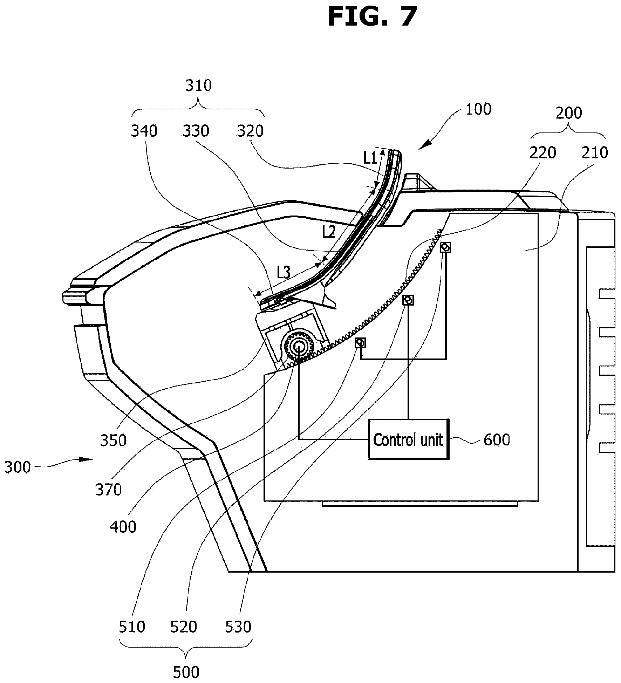

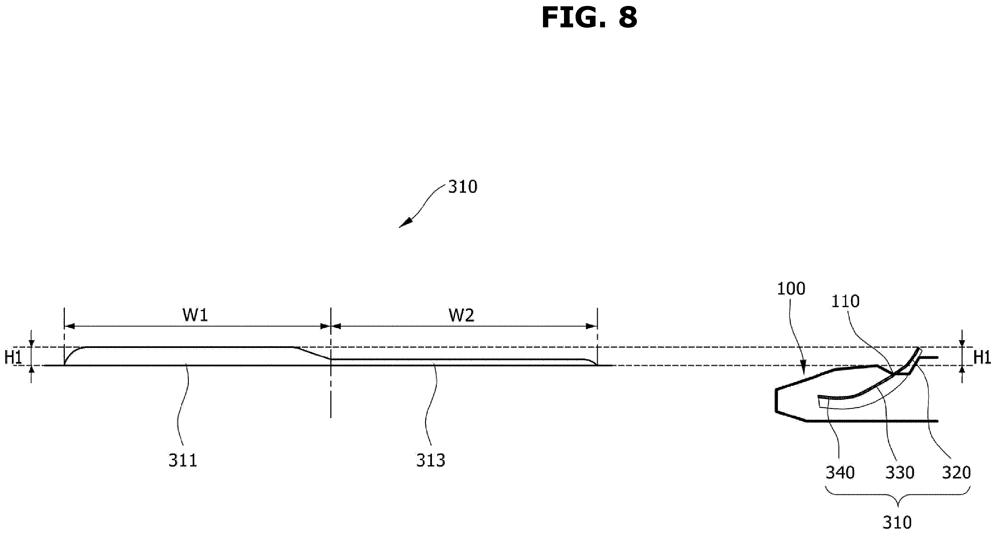

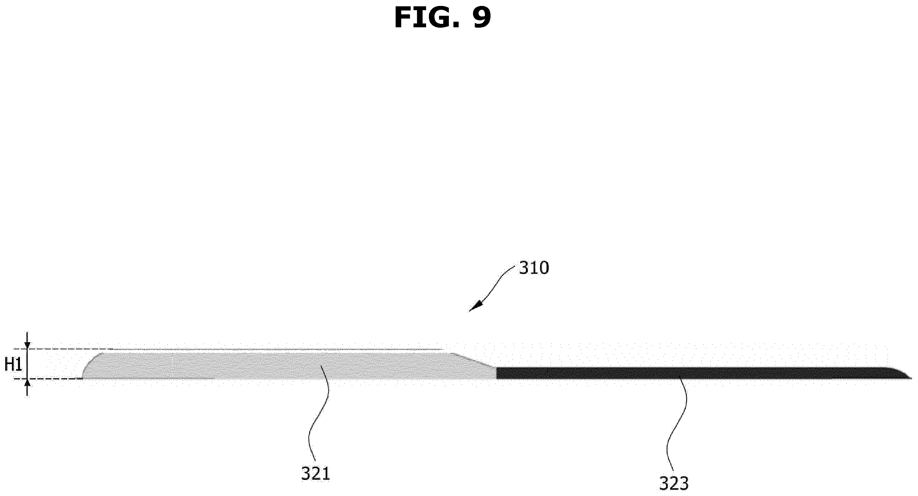

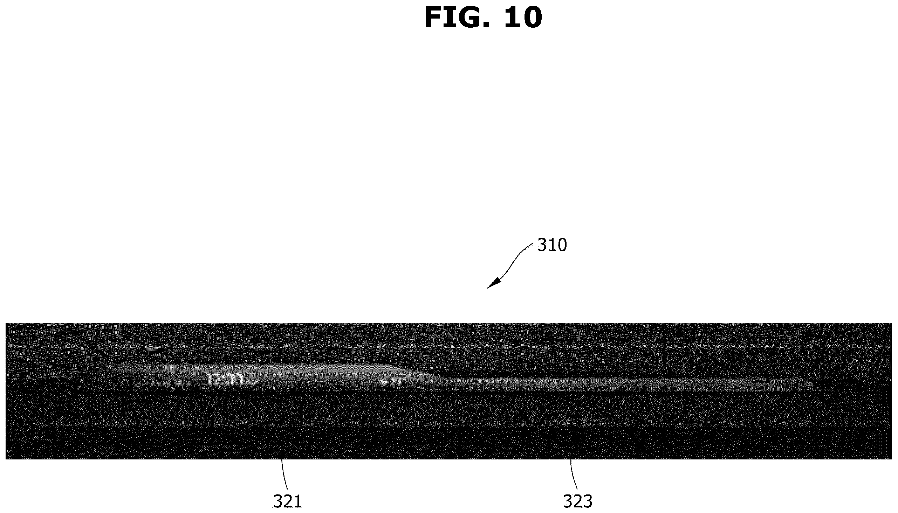

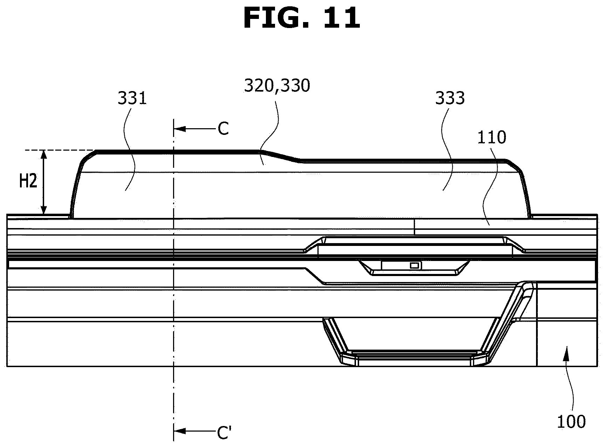

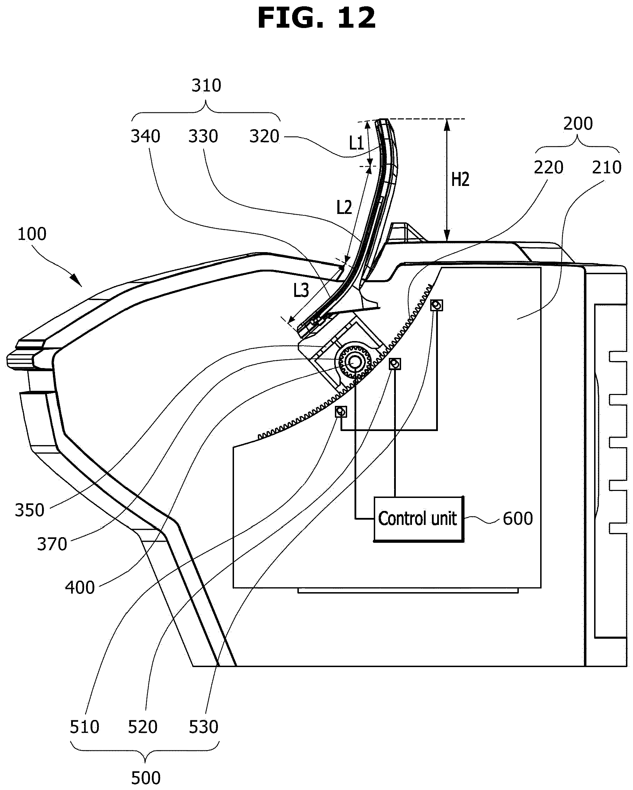

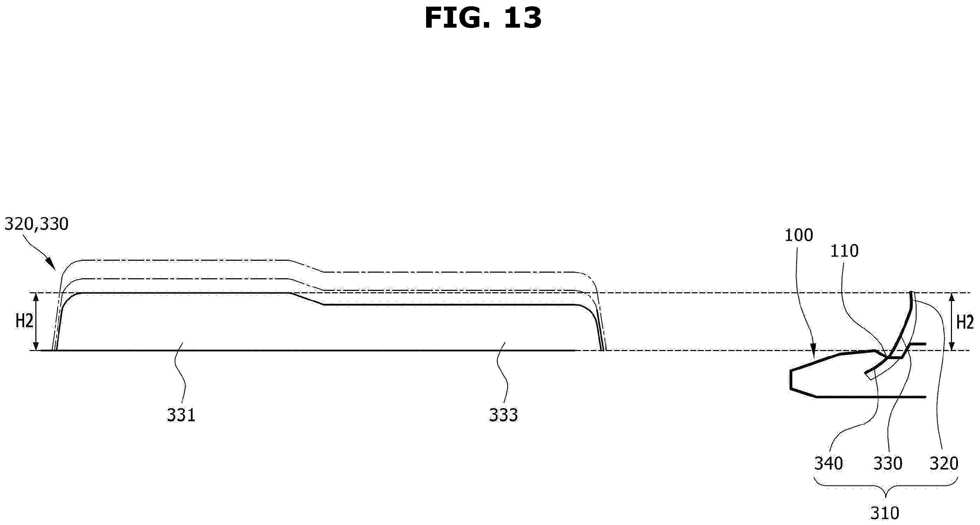

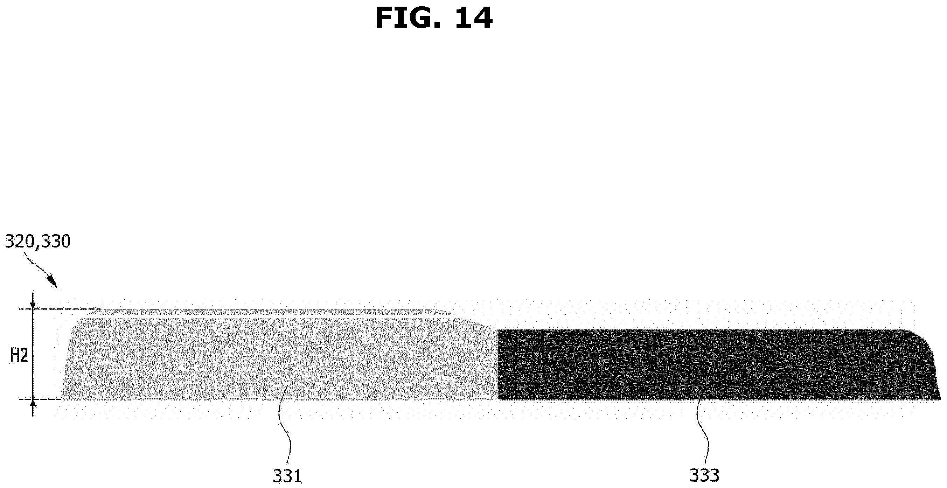

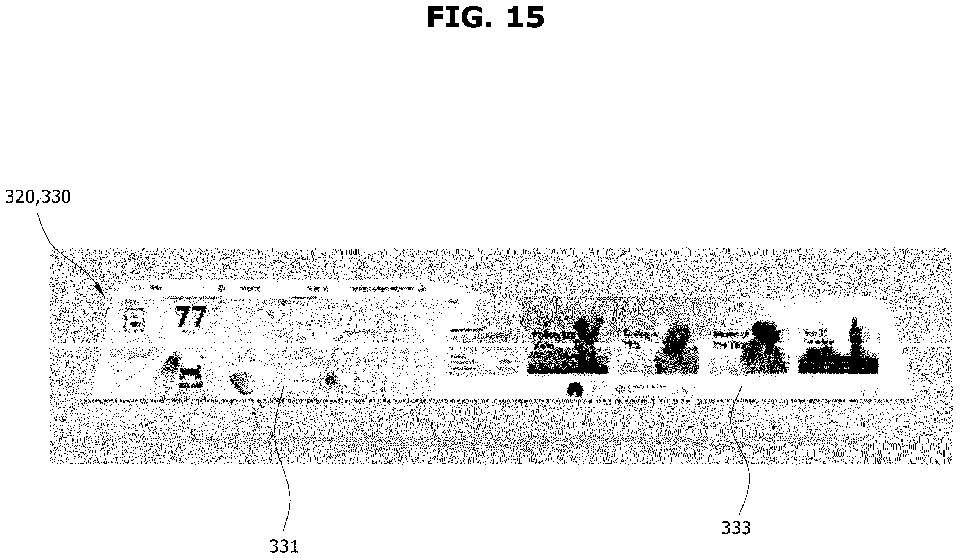

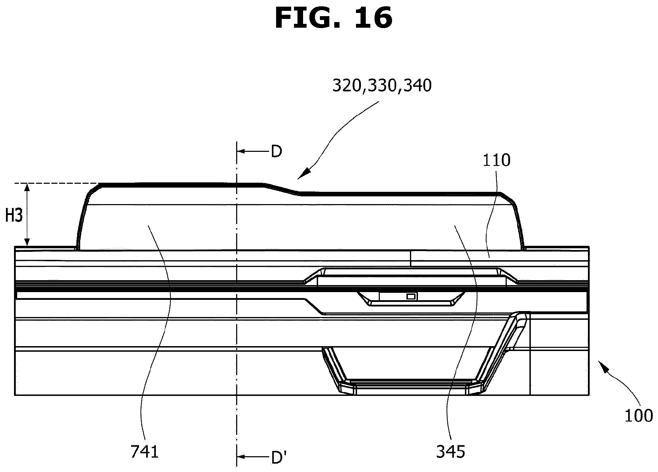

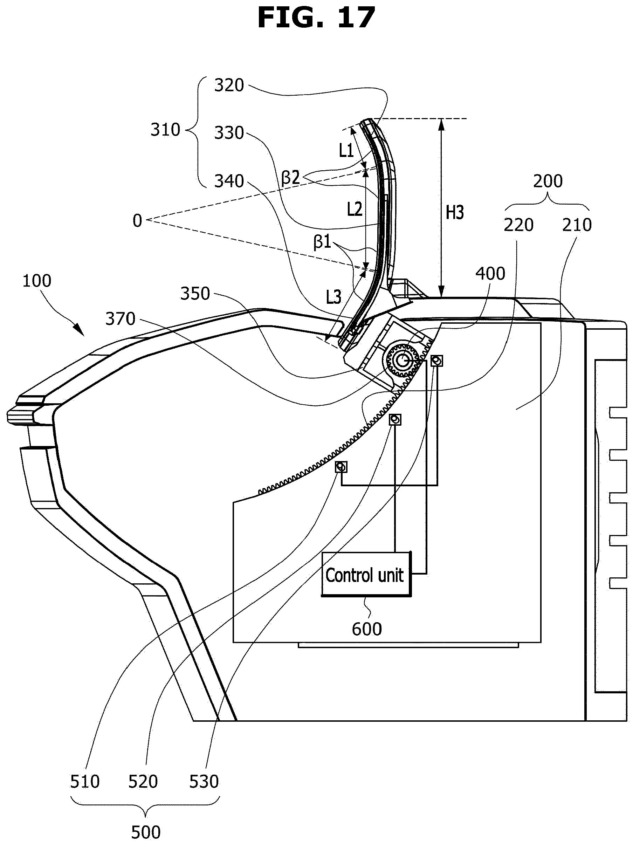

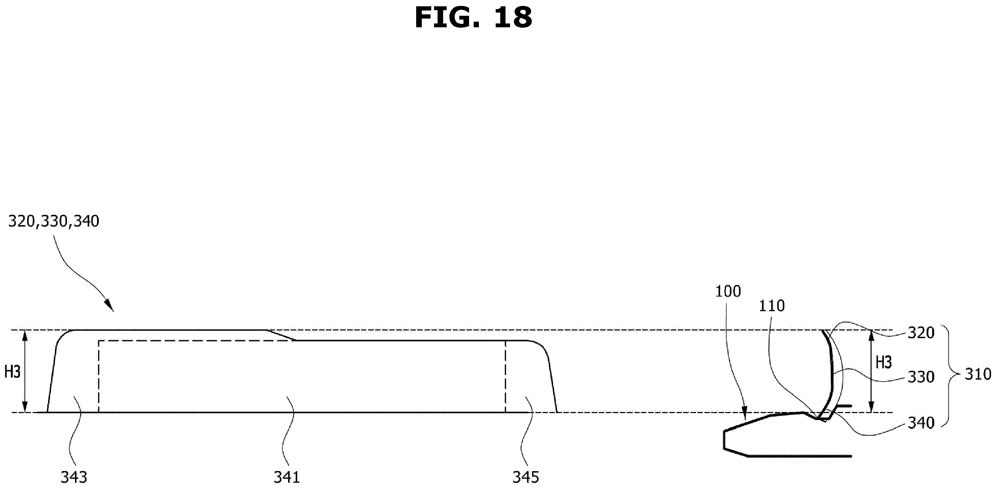

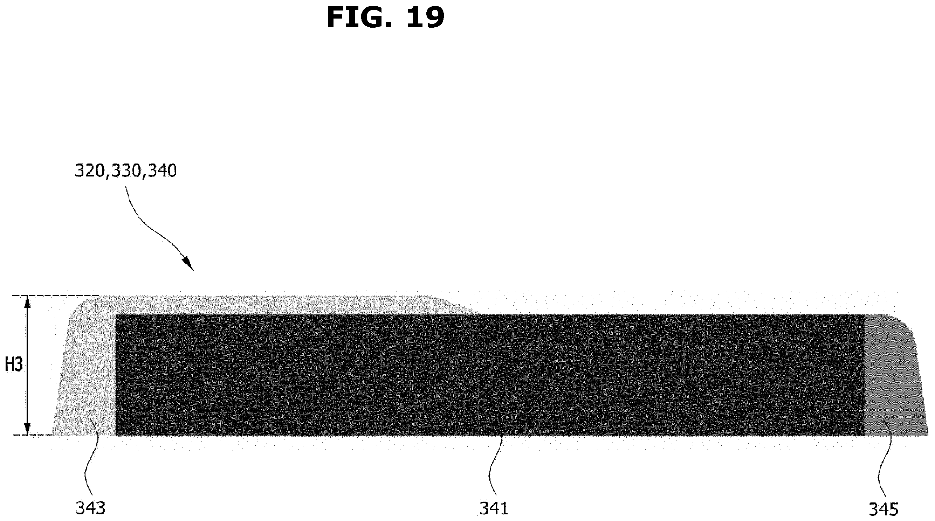

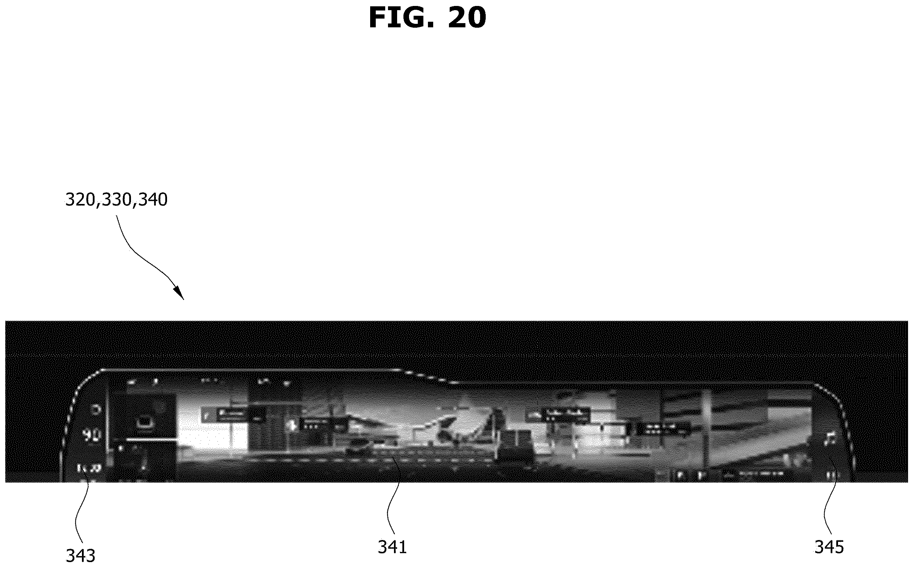

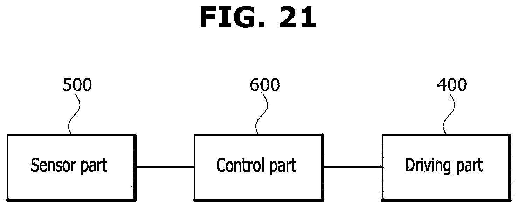

FIG. 1 is a front perspective view schematically illustrating a display apparatus for a vehicle according to an embodiment of the present invention. FIG. 2 is a perspective view schematically illustrating the display apparatus for a vehicle according to an embodiment of the present invention. FIG. 3 is a lateral cross-sectional view schematically illustrating the display apparatus for a vehicle according to an embodiment of the present invention. FIG. 4 is a lateral cross-sectional view schematically illustrating the state in which a display unit is rotated in a cockpit part in an embodiment of the present invention. FIG. 5 is a front view schematically illustrating the display apparatus for a vehicle in a reduction mode in an embodiment of the present invention. FIG. 6 is a diagram schematically illustrating a cross section taken along line A-A' in FIG. 5. FIG. 7 is a diagram schematically illustrating a cross section taken along line B-B' in FIG. 5. FIG. 8 is a diagram illustrating the protruding height of the display unit in the reduction mode in an embodiment of the present invention. FIG. 9 is a diagram illustrating the deployment of a screen area of the display unit in the reduction mode in an embodiment of the present invention. FIG. 10 is an exemplary diagram of information that is displayed in a screen area of the display unit in the reduction mode in an embodiment of the present invention. FIG. 11 is a front view schematically illustrating the display apparatus for a vehicle in a standard mode in an embodiment of the present invention. FIG. 12 is a diagram schematically illustrating a cross section taken along line C-C' in FIG. 11. FIG. 13 is a diagram illustrating the protruding height of the display unit in the standard mode in an embodiment of the present invention. FIG. 14 is a diagram illustrating the deployment of the screen area of the display unit in the standard mode in an embodiment of the present invention. FIG. 15 is an exemplary diagram of information that is displayed in the screen area of the display unit in the standard mode in an embodiment of the present invention. FIG. 16 is a front view schematically illustrating the display apparatus for a vehicle in an extension mode in an embodiment of the present invention. FIG. 17 is a diagram schematically illustrating a cross section taken along line D-D' in FIG. 16. FIG. 18 is a diagram illustrating the protruding height of the display unit in the extension mode in an embodiment of the present invention. FIG. 19 is a diagram illustrating the deployment of the screen area of the display unit in the extension mode in an embodiment of the present invention. FIG. 20 is an exemplary diagram of information that is displayed in the screen area of the display unit in the extension mode in an embodiment of the present invention. FIG. 21 is a block diagram illustrating a control flow in an embodiment of the present invention.

Referring to FIGS. 1 to 7, the display apparatus for a vehicle according to an embodiment of the present invention may include a cockpit part 100, a guide part 200, a display unit 300, and a driving part 400.

The cockpit part 100 is disposed in front of a passenger seat C in which a passenger who gets on a vehicle is seated. A handle for the steering of the vehicle, a speedometer for indicating the driving speed of the vehicle, a flowmeter for indicating the fuel state of the vehicle, etc. may be disposed in the cockpit part 100.

An opening 110 that is formed to be opened so that a display part 310 of the display unit 300 appears and disappears through the opening is provided in an upper surface of the cockpit part 100. The left and right width of the opening 110 is formed to be greater than the left and right width of the display part 310 so that the display part 310 appears and disappears through the opening.

The cockpit part 100 may further include a sealing part 120. The sealing part 120 is mounted on the circumference of the opening 110 and comes into contact with the display part 310. The sealing part 120 is formed to include an elastically deformable material.

The sealing part 120 prevents an alien substance, such as dust, from being introduced into the cockpit part 100 between the opening 110 and the display part 310.

The sealing part 120 may include a first sealing part 121 and a second sealing part 123.

The first sealing part 121 is mounted toward a front surface of the display part 310 on the opening 110. The second sealing part 123 is mounted toward a rear surface of the display part 310 on the opening 110. The first sealing part 121 and the second sealing part 123 can prevent an alien substance from being introduced through the opening 110 on the front surface and rear surface of the display part 310.

The guide part 200 is mounted within the cockpit part 100, and provides guidance to a movement of the display unit 300. The guide part 200 may include a guide body part 210 and a guide gear part 220.

The guide body part 210 is mounted on an internal space of the cockpit part 100, and is formed to have a curved surface that is concave toward the passenger seat C. A gear is formed in the guide gear part 220 along the curved surface of the guide body part 210 so that a moving path of a display gear part 370 of the display unit 300 is formed. The guide gear part 220 is engaged with the display gear part 370.

The guide gear part 220 is formed to have a curved shape that is downward concave when viewed from the side of the vehicle along the guide body part 210 formed to have the curved surface, so that the display part 310 of the display unit 300 is moved in a swivel moving way. In this case, the movement in the swivel moving way means that the display part is not moved in a straight line form, but the display part is moved as if the display part is rotated by using a rotation axis O illustrated in FIG. 3 as its center of rotation.

The display part 310 appears and disappears through the opening 110 while moving in a form in which the display part 310 is rotated around the virtual rotation axis O by the display gear part 370 that is moved along the guide gear part 220.

In the present embodiment, the guide body part 210 has been exemplified as having a curved surface shape. However, regardless of a shape of the guide body part 210, the guide gear part 220 may be formed to have a curved line shape that is downward concave when viewed from the side of the vehicle, and may implement a movement of the display gear part 370 that is engaged with the guide gear part 220 in a swivel moving way.

The display unit 300 is disposed within the cockpit part 100. The display unit 300 is moved along the guide part 200 so that a front surface of the display unit 300 from which a screen is output has a curved line-shaped moving path when viewed from the side of the vehicle, and appears to and disappears from the outside through the opening 110.

The display unit 300 is moved along the guide part 200 so that the display unit 300 comes from and goes to a plurality of points on the guide part 200. The protruding height of the display unit 300 that protrudes to the outside through the opening 110 is different at each of the plurality of points on the guide part 200.

The plurality of points on the guide part 200 at which the display unit 300 is moved on the guide part 200 corresponds to locations at which a first sensor part 510, second sensor part 520, and third sensor part 530 of a sensor part 500 to be described later are installed.

The display unit 300 may include the plurality of display parts 310 that outputs a screen including image information. The display parts 310 that neighbor each other are connected to form a set angle.

The plurality of display parts 310 may be connected and used as a multi-vision. Accordingly, the plurality of display parts 310 may provide one piece of image information to a passenger as one vision, or may be partitioned into a plurality of visions and simultaneously provide various pieces of image information to a passenger.

The display unit 300 may further include a display bracket part 350 and a display gear part 370.

The display bracket part 350 supports the display part 310. The display bracket part 350 supports one side (a lower side of the display part 310 in FIG. 6) of the display part 310. For example, the display bracket part 350 may support a third display part 340 that is disposed on the lower side among the plurality of display parts 310. The display bracket part 350 may support all of the display parts 310.

The display gear part 370 is rotatably mounted on the display bracket part 350, and is moved along the guide part 200 while being rotated by the driving part 400. The display gear part 370 has a gear formed in an outer side thereof, and is engaged with the guide gear part 220.

The display gear part 370 is axially connected to the driving part 400, and is moved along the guide gear part 220 while being rotated by an operation of the driving part 400. The height of the display part 310 that appears to and disappears from the outside through the opening 110 is adjusted based on the rotation direction and amount of rotation of the display gear part 370.

The driving part 400 provides electric power to the display unit 300 so that the display unit 300 is moved on the guide part 200. In the present invention, the driving part 400 may consist of a motor. The driving part 400 is axially connected to a central part of the display gear part 370, and rotates the display gear part 370.

Referring to FIGS. 3 to 20, the plurality of display parts 310 may include a first display part 320, a second display part 330, and the third display part 340.

The number of display parts 310 has been illustrated as being three, that is, the first display part 320, the second display part 330, and the third display part 340, but the present invention is not limited thereto. The plurality of display parts 310 may include two or four or more display parts that neighbor each other and that are consecutively connected.

In each of the plurality of display parts 310, a front surface from which a screen is output is formed of a plane. In this case, the front surface is a surface toward the passenger seat C in which a passenger who gets on the vehicle is seated. In the present embodiment, in each of the first display part 320, the second display part 330, and the third display part 340, the front surface from which a screen is output is formed of a plane.

The front surface of each of the first display part 320, the second display part 330, and the third display part 340 is formed of a plane. Accordingly, the display part can minimize the distortion of image information compared to a case in which the front surface is formed of a curved surface.

The number of plurality of points on the guide part 200 is identical with the number of the plurality of display parts 310.

In the present embodiment, the plurality of display parts 310 has been illustrated as including three display parts, that is, the first display part 320, the second display part 330, and the third display part 340. Accordingly, the number of plurality of points on the guide part 200 is set to 3 in accordance with the number of display parts 310.

In the present embodiment, the plurality of display parts 310 may include the first display part 320, the second display part 330, and the third display part 340.

The first display part 320 is formed to have a first upper and lower width L1. The first display part 320 protrudes to the outside through the opening 110 when the display gear part 370 reaches a first point on the guide part 200. In this case, the first point is set as a location of the first sensor part 510 of the sensor part 500 or a location corresponding to the location of the first sensor part 510 of the sensor part 500.

The second display part 330 is connected to the bottom of the first display part 320 and formed to have a second upper and lower width L2. The second display part 330 protrudes to the outside through the opening 110 when the display gear part 370 reaches a second point on the guide part 200. In this case, the second point is set as a location of the second sensor part 520 of the sensor part 500 or a location corresponding to the second sensor part 520 of the sensor part 500.

The third display part 340 is connected to the bottom of the second display part 330 and formed to have a third upper and lower width L3. The third display part 340 protrudes to the outside through the opening 110 when the display gear part 370 reaches a third point on the guide part 200. In this case, the third point is set as a location of the third sensor part 530 of the sensor part 500 or a location corresponding to the third sensor part 530 of the sensor part 500.

In the display apparatus for a vehicle according to an embodiment of the present invention, the protruding height of the display part 310 that protrudes to the outside through the opening 110 of the cockpit part 110 is adjusted in multiple stages depending on a plurality of display modes.

In the present embodiment, the display modes have been exemplified as being three modes, including a reduction mode, a standard mode, and an extension mode. FIG. 4 illustrates the deployment of the display parts 310 in the reduction mode, the standard mode, and the extension mode, respectively. In the display apparatus for a vehicle, the protruding height of the display part 310 is adjusted in three stages.

The reduction mode corresponds to the state in which the protruding height of the display part 310 is the lowest, and corresponds to the state in which the top of the display part 310 is the lowest location in FIG. 4. The extension mode corresponds to the state in which the protruding height of the display part 310 is the highest, and corresponds to the state in which the top of the display part 310 is the highest location in FIG. 4. The standard mode corresponds to the state in which the protruding height of the display part 310 is higher than that of the display part 310 in the reduction mode and lower than that of the display part 310 in the extension mode.

In the present embodiment, the reduction mode corresponds to the state in which only the first display part 320 has protruded from the cockpit part 100 to the outside. The standard mode corresponds to the state in which even the second display part 330, together with the first display part 320, has protruded from the cockpit part 100 to the outside. The extension mode corresponds to the state in which all of the first display part 320, the second display part 330, and the third display part 340 have protruded from the cockpit part 100 to the outside.

FIG. 3 illustrates the state in which the display part 310 has been disposed in the reduction mode. When the display part 310 is rotated around the virtual rotation axis O at an angle a1, the mode of the display part 310 changes into a display mode. When the display part 310 in the reduction mode is rotated at an angle (a1+a2), the mode of the display part 310 is changed into the extension mode. In this case, the angle a1 may be 17° to 23°, and the angle a2 may be 12° to 18°.

The second upper and lower width L2 of the second display part 330 may be formed to be wider than the first upper and lower width L1 of the first display part 320 and the third upper and lower width L3 of the third display part 340.

That is, the first display part 320 is formed to be narrower than the upper and lower width of the second display part 330. Accordingly, in the reduction mode, a degree that the display unit 300 hides a front field of vision of a passenger can be minimized because only the first display part 320 protrudes through the opening 110 and outputs a screen.

Furthermore, the upper and lower width of the second display part 330 is the greatest. Accordingly, in the standard mode, various types of information or content can be smoothly provided through a sufficient screen size. In the extension mode, a large-sized screen can be provided through an infortainment function including a cinema mode.

In the extension mode, an angle of the second display part 330, which is formed along with a road surface, may be 85° to 100°. In the present embodiment, in the extension mode, the second display part 330 is disposed to form an angle of approximately 90° along with a road surface. Accordingly, in the extension mode, a front surface of the second display part 330 that provides the greatest screen area is perpendicular or almost perpendicular to a gaze direction of a passenger, thereby improving watching convenience.

Referring to FIG. 8, the height of the first display part 320 that protrudes to the outside through the opening 110 is H1. The first display part 320 appears from and disappears into the cockpit part 100 through the opening 110 while being moved in a swivel moving way. Accordingly, the height H1 of the first display part 320 that protrudes to the outside through the opening 110 is smaller than the first upper and lower width L1, that is, the upper and lower width of the first display part 320 (H1 < L1).

Accordingly, a space that forms a moving path when the first display part 320 moves in the internal space of the cockpit part 100 can be reduced because the display unit 300 is moved in a swivel moving way, compared to a conventional pop-up way in which the display part appears and disappears in a direction perpendicular to a road surface.

The display gear part 370 of the display unit 300 is engaged with the guide gear part 220 of the guide part 200. The display gear part 370 is moved along the guide gear part 220 having a curved shape, which has been engaged therewith by being rotated by an operation of the driving part 400, so that the display part 310 appears and disappears through the opening 110.

Referring to FIGS. 11 and 12, the height of the first display part 320 and the second display part 330 that protrude to the outside through the opening 110, among the plurality of display parts 310, is H2. The first display part 320 and the second display part 330 appear from and disappear into the cockpit part 100 through the opening 110 while being moved in a swivel moving way. Accordingly, the height H2 of the first display part 320 and the second display part 330 that protrude to the outside through the opening 110 is smaller than the sum (L1+L2) of the first upper and lower width L1 of the first display part 320 and the second upper and lower width L of the second display part 330 (H2 < L1 + L2).

Accordingly, a space that forms a moving path when the first display part 320 and the second display part 330 are moved in the internal space of the cockpit part 100 can be reduced because the display unit 300 is moved in a swivel moving way compared to a conventional pop-up way in which the display unit appears and disappears in a direction perpendicular to a road surface.

Referring to FIGS. 16 and 17, the height of the first display part 320, the second display part 330, and the third display part 340 that protrude to the outside through the opening 110, among the plurality of display parts 310, is H3. The first display part 320, the second display part 330, and the third display part 340 appear from and disappear into the cockpit part 100 through the opening 110 while being moved in a swivel moving way. Accordingly, the height H3 of the first display part 320, the second display part 330, and the third display part 340 that protrude to the outside through the opening 110 is smaller than the sum (L1+L2+L3) of the first upper and lower width L1 of the first display part 320, the second upper and lower width L2 of the second display part 330, and the third upper and lower width L3 of the third display part 340 (H3 < L1 + L2 + L3).

Accordingly, a space that forms a moving path when the first display part 320, the second display part 330, and the third display part 340 are moved in the internal space of the cockpit part 100 can be reduced because the display unit 300 is moved in a swivel moving way, compared to a conventional pop-up way in which the display part appears and disappears in a direction perpendicular to a road surface.

Referring to FIG. 17, an angle that is formed by the front surface of the second display part 330 having the plane and a front surface of the third display part 340 having the plane is β1. An angle that is formed by a front surface of the first display part 320 having the plane and the front surface of the second display part 330 having the plane is β2. In the present embodiment, the angle β1 may be 140° to 150°, and the angle β2 may be 145° to 155°.

The angle β2 may be greater than the angle β1. The third display part 340 is in the state in which the third display part 340, among the plurality of display parts 310, has been disposed at the lowest location, and an eye of a passenger is placed over the third display part 340. Accordingly, the bent angle β2 of the third display part 340 is greater than the bent angle β1 of the first display part 320 so that the passenger can fully view a screen of the third display part 340 in the extension mode.

Furthermore, the first display part 320 is in the state in which the first display part 320, among the plurality of display parts 310, is disposed at the highest location, and an eye of a passenger is almost parallel to the first display part 320 in the extension mode. Accordingly, the bent angle β1 of the first display part 320 is smaller than the bent angle β2 of the third display part 340 so that a screen blind spot does not occur even in the extension mode.

The first display part 320, the second display part 330, and the third display part 340 may be connected in the form of a curved surface. Accordingly, a sense of alienation in a screen area that is formed by the first display part 320 and the second display part 330 in the standard mode and a screen area that is formed by the first display part 320, the second display part 330, and the third display part 340 in the extension mode can be removed.

A rear surface of each of the first display part 320, the second display part 330, and the third display part 340 has a curved surface. Accordingly, although the display part 310 is moved in a swivel moving way, an interval between the rear surface of the display part 310 and the opening 100 can be constantly maintained.

The display apparatus for a vehicle according to an embodiment of the present invention further includes the sensor part 500 and a control part 600.

Referring to FIGS. 6 and 21, the sensor part 500 is disposed in the guide body part 210 in a plural number along the guide gear part 220, and detects a location of the display unit 300. The number of plurality of sensor parts 500 may be the same as the number of plurality of display parts 310.

The sensor part 500 includes the first sensor part 510, the second sensor part 520, and the third sensor part 530. The first sensor part 510, the second sensor part 520, and the third sensor part 530 are disposed at different heights along the guide gear part 220.

The control part 600 controls an operation of the driving part 400 in response to a detection signal from the sensor part 500.

The control part 600 operates the driving part 400 when receiving a reduction mode (or simple mode) command from a passenger, and stops the operation of the driving part 400 when receiving a detection signal, indicating that the display gear part 370 has reached the first point on the guide part 200, from the first sensor part 510. Accordingly, a movement of the display part 310 is stopped, so that the reduction mode in which only the first display part 320 protrudes to the outside through the opening 110 is implemented.

The control part 600 operates the driving part 400 when receiving a standard mode (or normal mode) command from a passenger, and stops the operation of the driving part 400 when receiving a detection signal, indicating that the display gear part 370 has reached the second point on the guide part 200, from the second sensor part 520. Accordingly, a movement of the display part 310 is stopped, so that the standard mode in which even the second display part 330, together with the first display part 320, protrudes to the outside through the opening 110 is implemented.

The control part 600 operates the driving part 400 when receiving an extension mode (or full mode) command from a passenger, and stops the operation of the driving part 400 when receiving a detection signal, indicating that the display gear part 370 has reached the third point on the guide part 200, from the third sensor part 540. Accordingly, a movement of the display part 310 is stopped, so that the extension mode in which even the third display part 340, together with the first display part 320 and the second display part 330, has protruded to the outside through the opening 110 is implemented.

An operation of the display part 310 protruding in the display apparatus for a vehicle according to an embodiment of the present invention is described.

Referring to FIGS. 5 to 10, when receiving the reduction mode command, the control part 600 drives and controls the display gear part 370 so that the display gear part 370 reaches the first point on the guide part 200. Accordingly, the first display part 320 protrudes to the outside through the opening 110, and the second display part 330 and the third display part 340 are disposed within the cockpit part 100. When the standard mode or the extension mode is changed into the reduction mode, the display part 310 moves in a direction in which the display part 310 enters the opening 110.

In the reduction mode, only the first display part 320, among the plurality of display parts 310, protrudes from the opening 110 to the outside, and the second display part 330 and the third display part 340 are disposed within the cockpit part 100.

In the reduction mode, a screen area that is formed by the first display part 320 includes a reduction cluster display part 321 and a reduction infortainment display part 323. In FIG. 8, the left and right width of the reduction cluster display part 321 is set as W1, and the left and right width of the reduction infortainment display part 323 is set as W2. W1 and W2 may be the same length, and may be differently set based on screen output information.

The reduction cluster display part 321 may display at least any one of a driving environment, navigation information, and a speedometer on one side (a left side in FIG. 9) of the screen area of the first display part 320.

The reduction infortainment display part 323 may display infortainment content information on the other side (a right side in FIG. 9) of the screen area of the first display part 320 in an icon form. The infortainment content information of the reduction infortainment display part 323 may include a music playback state, a call state, a messenger state, an SNS state, and time information.

An icon in the reduction infortainment display part 323 is arranged in a plural number in the length direction (i.e., a horizontal direction in FIG. 9) of the reduction infortainment display part 323. The title or lyrics of music that are listening may be displayed on the reduction infortainment display part 323.

As time information is displayed on the reduction cluster display part 321 as in FIG. 10, various types of information that are provided by the reduction cluster display part 321 and the reduction infortainment display part 323 may be changed.

Power consumption of the display part 310 in the reduction mode is smaller than that of the display part 310 in the standard mode or the extension mode. Accordingly, a passenger can reduce power consumption by setting a display mode as the reduction mode if the amount of power of a vehicle is not sufficient or it is necessary to reduce power.

Referring to FIGS. 11 to 15, when receiving the standard mode command, the control part 600 drives and controls the display gear part 370 so that the display gear part 370 reaches the second point on the guide part 200. Accordingly, the first display part 320 and the second display part 330 protrude to the outside through the opening 110, and the third display part 340 is disposed within the cockpit part 100.

In the standard mode, the first display part 320 and the second display part 330, among the plurality of display parts 310, protrude to the outside through the opening 110, and the third display part 340 is disposed within the cockpit part 100.

The screen area that is formed by the first display part 320 and the second display part 330 that have protruded to the outside through the opening 110 in the standard mode includes a standard cluster display part 331 and a standard infortainment display part 333.

The standard cluster display part 331 may display at least any one of a driving environment, navigation information, and a speedometer on one side (a left side in FIG. 14) of the screen area of the first display part 320 and the second display part 330 in a graphic form. The standard cluster display part 331 may display the same information as the reduction cluster display part 321 more specifically by using the graphic form.

The standard infortainment display part 333 may display infortainment content on the other side (a right side in FIG. 14) of the screen area of the first display part 320 and the second display part 330 in a graphic form. The infortainment content of the standard infortainment display part 333 includes call-related content, message-related content, SNS-related content, and time information, in addition to music content and video content including a movie. The standard infortainment display part 333 displays more detailed information than the reduction infortainment display part 323.

Image information that is provided by the standard cluster display part 331 and image information that is provided by the standard infortainment display part 333 may be exchanged.

Referring to FIGS. 16 to 20, when receiving the extension mode command, the control part 600 drives and controls the display gear part 370 so that the display gear part 370 reaches the third point on the guide part 200. Accordingly, the first display part 320, the second display part 330, and the third display part 340 protrude to the outside through the opening 110.

In the extension mode, the first display part 320, the second display part 330, and the third display part 340, among the plurality of display parts 310, protrude to the outside through the opening 110, so that a part of a lower side of the third display part 340 is disposed within the cockpit part 100.

The screen area that is formed by the first display part 320, the second display part 330, and the third display part 340 that have protruded to the outside through the opening 110 in the extension mode includes a main infortainment display part 341, an extension cluster display part 343, and a sub-infortainment display part 345.

The main infortainment display part 341 displays an infortainment image, for example, a full image in a central part (on the basis of FIG. 19) of the screen area that is formed by the first display part 320, the second display part 330, and the third display part 340. The main infortainment display part 341 is formed to be wider than each of the extension cluster display part 343 and the sub-infortainment display part 345 in the screen area of the first display part 320, the second display part 330, and the third display part 340. The main infortainment display part 341 may provide a full image of video including a movie, a full navigation mode, or a full image of infortainment content.

The extension cluster display part 343 may display at least any one of a driving environment, a vehicle state, and a speedometer on one side (a left side in FIG. 19) of the main infortainment display part 341 in the screen area of the first display part 320, the second display part 330, and the third display part 340.

The sub-infortainment display part 345 may display infortainment content information on the other side (a right side in FIG. 19) of the main infortainment display part 341 in an icon form or in a graphic form in the screen area of the first display part 320, the second display part 330, and the third display part 340.

Screen output information that is provided by the extension cluster display part 343 and screen output information that is provided by the sub-infortainment display part 345 may be exchanged.

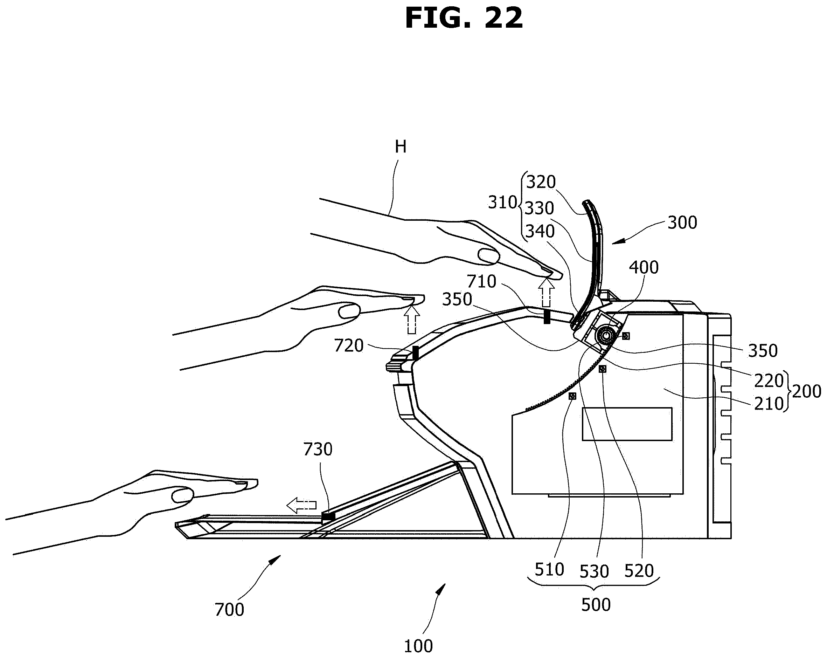

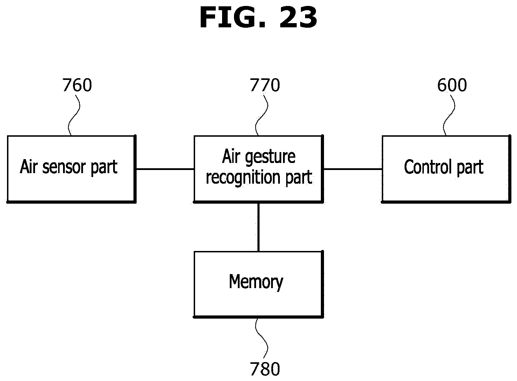

FIG. 22 is a diagram illustrating an operating state of the air gesture detection part in the display apparatus for a vehicle according to an embodiment of the present invention. FIG. 23 is a block diagram illustrating a control flow of the air gesture detection part according to an embodiment of the present invention.

Referring to FIGS. 1, 2, 22, and 23, the display apparatus for a vehicle according to an embodiment of the present invention may include one or more air gesture detection parts. The air gesture detection part is installed in the cockpit part 100, and detects a movement of a passenger.

The control part 600 controls an operation of the display unit 300 in response to a gesture signal from the air gesture detection part.

The air gesture detection part may include a first air gesture detection part 710, a second air gesture detection part 720, and a third air gesture detection part 730. In the present embodiment, the air gesture detection part has been exemplified as including the three air gesture detection parts, but may include one or two or more air gesture detection parts.

If the plurality of air gesture detection parts is included, the air gesture detection parts are divided and installed in a plurality of places, respectively, on the cockpit part 100. Accordingly, the display apparatus for a vehicle may recognize a movement of a passenger at each of the plurality of places, and may control an operation of a display screen of the display unit 300 based on the recognized movement.

The first air gesture detection part 710 is installed at the top of the cockpit part 100 through which the display unit 300 appears and disappears. The first air gesture detection part 710, among the plurality of air gesture detection parts, is disposed to be closest to the display unit 300. The first air gesture detection part 710 may be disposed in front of the display unit 300. In this case, the front means a front (a left side in FIG. 22) in a direction in which the cockpit part 100 is directed toward the passenger, not a front (a right side in FIG. 22) in a direction in which the vehicle travels.

The passenger can reduce the occurrence of a health and hygiene problem, such as a virus infection according to direct contact with the display unit 300 because the passenger can manipulate the display unit 300 through the first air gesture detection part 710 in a contactless way. The passenger may check a situation, which is manipulated through the first air gesture detection part 710, through a screen area of the display part 310 in real time.

The first air gesture detection part 710 is disposed in a central part of the cockpit part 100 in a horizontal direction thereof. As illustrated in FIG. 1, the display unit 300 is disposed to be inclined toward one side (a left side in FIG. 1) of the cockpit part 100. In contrast, the first air gesture detection part 710 is disposed at the central part of the cockpit part 100.

Accordingly, both a passenger who is seated in a left passenger seat C and a passenger who is seated in a right passenger seat C in FIG. 2 can easily access and use the first air gesture detection part 710.

The first air gesture detection part 710 scans a movement of a passenger over the first air gesture detection part 710. Referring to FIG. 22, the passenger makes a gesture of manipulating the display unit 300 while moving his or her hand upward from the first air gesture detection part 710. That is, a direction in which the first air gesture detection part 710 is recognized is an upper side. In order to increase the recognition rate of the hand movement, the first air gesture detection part 710 is installed to be exposed to the outside of the cockpit part 100 in a direction that faces the direction in which the first air gesture detection part 710 is recognized.

The first air gesture detection part 710 may be integrally formed with the cockpit part 100. The first air gesture detection part 710 may have a left and right width of 30 cm to 40 cm and a front and back width of 1 cm to 2 cm. The first air gesture detection part 710 may be a hovering gesture recognition type air gesture detection part so that the first air gesture detection part 710 can recognize a hovering gesture.

The second air gesture detection part 720 is installed at the front of the cockpit part 100 so that the second air gesture detection part 720 is closer to the passenger than the first air gesture detection part 710. In this case, the front means a side (a left side in FIG. 22) in which the cockpit part 100 is directed toward the passenger. Accordingly, the passenger can manipulate the display unit 300 by using the second air gesture detection part 720 even without stretching his or her hand up to the first air gesture detection part 710.

The passenger can manipulate the display unit 300 through the second air gesture detection part 720 in a contactless way. Accordingly, the occurrence of a health and hygiene problem, such as a virus infection attributable to direct contact with the display unit 300, can be reduced. The passenger may check a situation, which is manipulated through the second air gesture detection part 720, through the screen area of the display part 310 in real time.

As illustrated in FIG. 1, the second air gesture detection part 720 is disposed at the central part of the cockpit part 100 in the horizontal direction thereof. Accordingly, both a passenger who is seated in the left passenger seat C and a passenger who is seated in the right passenger seat C in FIG. 2 can easily access and use the second air gesture detection part 720.

The second air gesture detection part 720 scans a movement of a passenger over the second air gesture detection part 720. Referring to FIG. 22, the passenger makes a gesture of manipulating the display unit 300 while moving his or her hand upward from the second air gesture detection part 720. That is, a direction in which the second air gesture detection part 720 is recognized is an upper side. In order to increase the recognition rate of the hand movement, the second air gesture detection part 720 is installed to be exposed to the outside of the cockpit part 100 in the direction that faces the direction in which the second air gesture detection part 720 is recognized.

The second air gesture detection part 720 may be integrally formed with the cockpit part 100. The second air gesture detection part 720 may have a left and right width of 30 cm to 40 cm and a front and back width of 1 cm to 2 cm. The second air gesture detection part 720 may be a hovering gesture recognition type air gesture detection part so that the second air gesture detection part 720 can recognize a hovering gesture.

The third air gesture detection part 730 is installed in a central partition part 150 of the cockpit part 100. The central partition part 150 is formed at the central part of the cockpit part 100 in a way to protrude from the cockpit part 100 so that the central partition part 150 partitions the left passenger seat C and the right passenger seat C.

The third air gesture detection part 730, among the plurality of air gesture detection parts, is disposed to be closest to the passenger. Furthermore, since the central partition part 150 is disposed in an area lower than another area of the cockpit part 100, the passenger can conveniently manipulate the display unit 300 at a low location even without stretching his or her hand far away. In particular, if a passenger drives, the use of the third air gesture detection part 730 is also of help in safe driving.

The passenger can manipulate the display unit 300 through the third air gesture detection part 730 in a contactless way. Accordingly, the occurrence of a health and hygiene problem, such as a virus infection attributable to direct contact with the display unit 300, can be reduced. The passenger may check a situation, which is manipulated through the third air gesture detection part 730, through the screen area of the display part 310 or a projector display part 735 in real time. The projector display part 735 may be installed on the central partition part 150, and may output information that is the same as or different from information output by the display part 310.

As illustrated in FIG. 1, the third air gesture detection part 730 is disposed in the central partition part 150 that is disposed at the central part of the cockpit part 100 in the horizontal direction thereof. Accordingly, both a passenger who is seated in the left passenger seat C and a passenger who is seated in the right passenger seat C in FIG. 2 can easily access and use the third air gesture detection part 730.

The third air gesture detection part 730 scans a movement of the passenger in front of the third air gesture detection part 730. Referring to FIG. 22, the passenger makes a gesture of manipulating the display unit 300 while moving his or her hand in front of the third air gesture detection part 730. That is, a direction in which the third air gesture detection part 730 is recognized is ahead of the third air gesture detection part 730. In order to increase the recognition rate of the hand movement, the third air gesture detection part 730 is installed to be exposed to the outside of the cockpit part 100 in the direction that faces the direction in which the third air gesture detection part 730 is recognized.

The third air gesture detection part 730 may be integrally formed with the cockpit part 100. The third air gesture detection part 730 may have a left and right width of 30 cm to 40 cm and a front and back width of 1 cm to 2 cm. The third air gesture detection part 730 may be a hovering gesture recognition type air gesture detection part so that the third air gesture detection part 730 can recognize a hovering gesture.

Each of the first air gesture detection part 710, the second air gesture detection part 720, and the third air gesture detection part 730 may include an air sensor part 760 and an air gesture recognition part 770.

The air sensor part 760 scans a movement of a passenger, and the air gesture recognition part 770 recognizes an air gesture corresponding to the movement of the passenger. The control part 600 controls an operation of a display screen of the display unit 300 in response to the air gesture recognized by the air gesture recognition part 770.

The air sensor part 760 generates a movement image corresponding to an air gesture by scanning a movement of a passenger (or driver or user), that is, the air gesture. The air sensor part 760 may be a color camera, an infrared camera, a depth camera, a stereo camera, or an RGB-D camera. In this case, the movement of the passenger is defined as a concept that includes another movement of the body other than a hand movement of the passenger.

The air gesture recognition part 770 recognizes an air gesture of a passenger, for example, a hand movement of the passenger by processing a movement image received from the air sensor part 760.

When receiving a movement image corresponding to an air gesture of a passenger from the air sensor part 760, the air gesture recognition part 770 may perform pre-processing processes, such as slant corrections, deskewing, denosing, thinning, and contour smoothing. In this case, each of the pre-processing processes is an already known technology in the image processing field, and a detailed description thereof is omitted.

In order to recognize an air gesture of a passenger, the air gesture recognition part 770 extracts a movement pattern corresponding to the air gesture of the passenger from a pre-processed movement image, and recognizes the air gesture of the passenger corresponding to the extracted movement pattern by comparing the extracted movement pattern and a gesture pattern that has been stored in the memory 780. The movement pattern corresponding to the air gesture of the passenger may include a movement pattern related to another body action in addition to a movement pattern related to a hand movement.

In order to extract a movement pattern related to a hand movement from a pre-processed movement image, the air gesture recognition part 770 may extract a feature vector related to an outer shape of a hand in a frame unit, may calculate a difference value between a feature vector extracted from a previous frame and a feature vector extracted from a current frame, and may extract the movement pattern related to the hand movement based on the calculated difference value.

As a method of extracting a feature vector related to an outer shape of a hand from a pre-processed movement image, a known image processing algorithm, such as an object extraction algorithm or a background removal algorithm, may be used. The present invention is not characterized in limiting such an image processing algorithm, and a detailed description thereof is replaced with a known technology.

The control part 600 controls a screen configuration that is displayed on the display part 310, based on the results of the recognition of an air gesture of a passenger that is recognized by the air gesture recognition part 770. That is, the control part 600 may control the construction and operation of the screen area that is formed by the first display part 320 when the reduction mode is executed, may control the construction and operation of the screen area that is formed by the first display part 320 and the second display part 330 when the standard mode is executed, and may control the construction and operation of the screen area that is formed by the first display part 320, the second display part 330, and the third display part 340 when the extension mode is executed.

The control part 600 may be constructed to include at least one graphic processor. When the reduction mode is executed, the control part 600 may move a screen configuration that is displayed on the reduction cluster display part 321 to a screen of the reduction infortainment display part 323, or may move a screen configuration that is displayed on the reduction infortainment display part 323 to a screen of the reduction cluster display part 321.

When the standard mode is executed, the control part 600 may move a screen configuration that is displayed on the standard cluster display part 331 to a screen of the standard infortainment display part 333, or may move a screen configuration that is displayed on the standard infortainment display part 333 to a screen of the standard cluster display part 331.

Furthermore, when the extension mode is executed, the control part 600 may move a screen configuration that is displayed on the extension cluster display part 343 to a screen of the sub-infortainment display part 345, or may move a screen configuration that is displayed on the sub-infortainment display part 345 to a screen of the extension cluster display part 343.

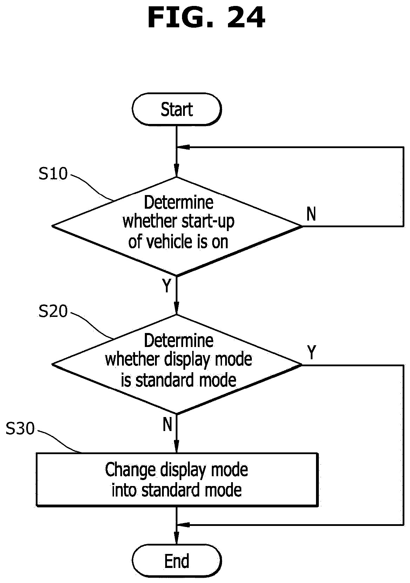

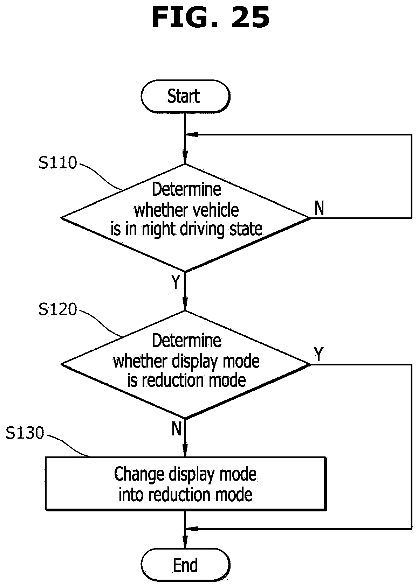

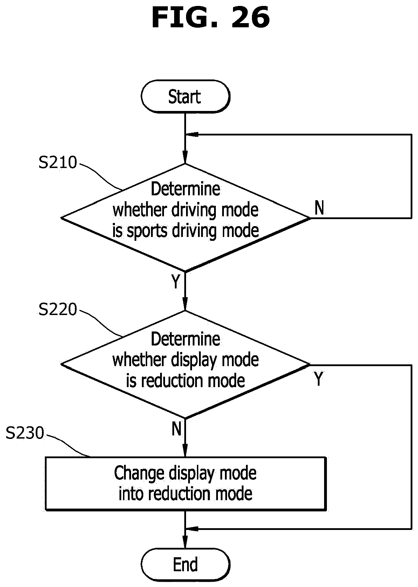

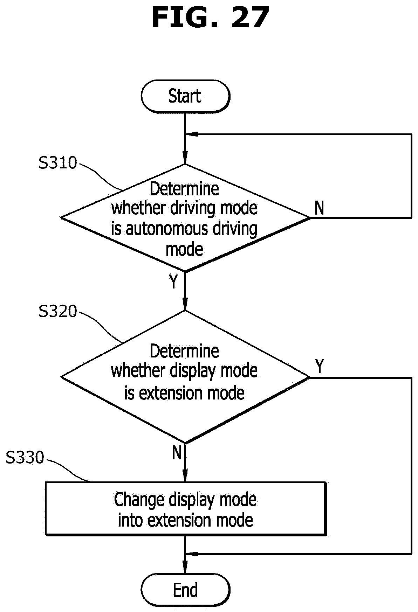

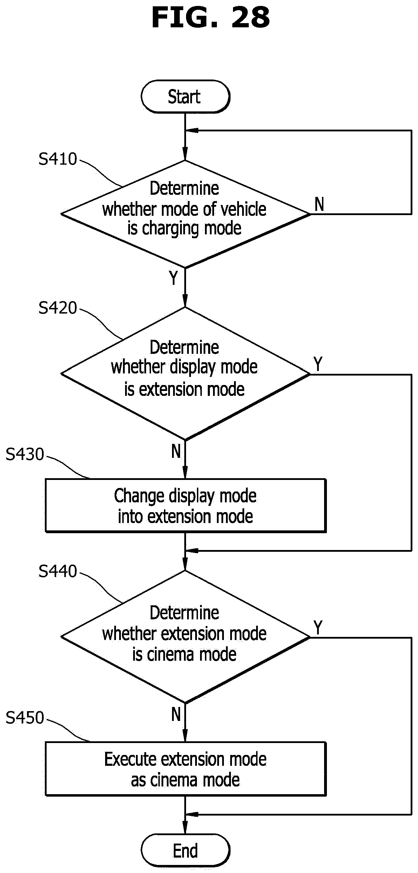

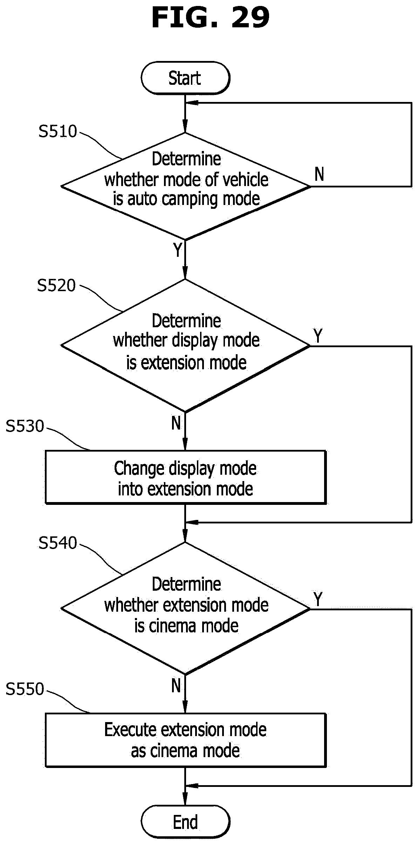

FIG. 24 is a diagram illustrating a control flow in the state in which the start-up of a vehicle has become on in the display apparatus for a vehicle according to an embodiment of the present invention. FIG. 25 is a diagram illustrating a control flow when a vehicle is in a night driving state in the display apparatus for a vehicle according to an example not falling within the claimed scope of the present invention. FIG. 26 is a diagram illustrating a control flow when a vehicle is in a sports driving mode in the display apparatus for a vehicle according to an example not falling within the claimed scope of the present invention. FIG. 27 is a diagram illustrating a control flow when a vehicle is in an autonomous driving mode in the display apparatus for a vehicle according to an example not falling within the claimed scope of the present invention. FIG. 28 is a diagram illustrating a control flow when a vehicle is in a charging mode in the display apparatus for a vehicle according to an example not falling within the claimed scope of the present invention. FIG. 29 is a diagram illustrating a control flow when a vehicle is in an auto camping mode in the display apparatus for a vehicle according to an example not falling within the claimed scope of the present invention.

FIG. 24 is a diagram illustrating a control flow in the state in which the start-up of a vehicle has become on in the display apparatus for a vehicle according to an embodiment of the present invention.

Referring to FIG. 24, a method of controlling a display apparatus for a vehicle according to the present embodiment may include a step S10 of determining whether the start-up of a vehicle has become on, a step of activating the display unit 300 when it is determined that the start-up of the vehicle has become on, a step S20 of determining whether a display mode of the activated display unit 300 is the standard mode, and a step 30 of changing the display mode into the standard mode when it is determined that the display mode is not the standard mode.

The step S10 of determining whether the start-up of the vehicle has become on may be performed by receiving, by the control part 600, an operation signal of a start-up device (not illustrated) which is generated when a passenger starts the vehicle up. When the start-up device becomes on, the control part 600 determines that the start-up of the vehicle has become on, and activates the display unit 300 by making on the display unit 300.

When the display unit 300 is activated, the control part 600 determines whether a display mode of the display unit 300 is the standard mode (S20).

If the display mode is not the standard mode, the control part 600 operates the driving part 400 so that the display gear part 370 reaches the second point on the guide part 200. The control part 600 detects whether the display gear part 370 reaches the second point on the guide part 200 through the second sensor part 520. When it is confirmed that the display gear part 370 reaches the second point, the control part 600 stops the operation of the driving part 400. Accordingly, a change from the display mode of the display apparatus for a vehicle to the standard mode is completed (S30). When it is determined that the display mode is the standard mode, the control part 600 terminates control over the operation of the driving part 400 without a need to separately drive the driving part 400.

The time taken to change a mode of the display apparatus for a vehicle into another mode can be reduced because the mode is set as the standard mode that is the normal mode, among the plurality of display modes, when the passenger starts the vehicle up.

In the present embodiment, the step of determining whether the start-up of the vehicle has become on may be replaced with a case in which whether a mode of the vehicle is the autonomous driving mode is determined. That is, the method of controlling a display apparatus for a vehicle according to the present embodiment may be implemented by a step of determining whether a mode of the vehicle is the autonomous driving mode, a step of activating the display unit 300 when it is determined that the mode of the vehicle is the autonomous driving mode, a step of determining whether a display mode of the activated display unit 300 is the standard mode, and a step of changing the display mode into the standard mode when it is determined that the display mode is not the standard mode.

FIG. 25 is a diagram illustrating a control flow when a vehicle is in the night driving state in the display apparatus for a vehicle according to an example not falling within the claimed scope of the present invention.

Referring to FIG. 25, a method of controlling a display apparatus for a vehicle according to the present example not falling within the claimed scope may include a step S110 of determining whether the vehicle is in the night driving state, a step S120 of determining whether a display mode of the display unit 300 is the reduction mode when it is determined that the vehicle is in the night driving state, and a step S130 of changing the display mode into the reduction mode when it is determined that the display mode is not the reduction mode.

A vehicle includes an illumination sensor (not illustrated) for distinguishing between day and night based on the brightness of light. The step S110 of determining whether the vehicle is in the night driving state may be performed based on a day and night identification signal that is transmitted by the illumination sensor.

When it is determined that the vehicle is in the night driving state, the control part 600 determines whether a display mode of the display unit 300 is the reduction mode (S120). If the display unit 300 is in the state in which the display unit 300 has not been activated, that is, an OFF state, the control part 600 terminates control of an operation of the display unit 300.

When it is determined that the display mode is not the reduction mode, the control part 600 operates the driving part 400 so that the display gear part 370 reaches the first point on the guide part 200. The control part 600 detects whether the display gear part 370 reaches the first point on the guide part 200 through the first sensor part 510. When it is confirmed that the display gear part 370 has reached the first point, the control part 600 stops the operation of the driving part 400. Accordingly, a change from the display mode of the display apparatus for a vehicle to the reduction mode is completed (S130). When it is determined that the display mode is the reduction mode, the control part 600 terminates control over the operation of the driving part 400 without a need to separately drive the driving part 400.

In the method of controlling a display apparatus for a vehicle according to the present example not falling within the claimed scope, a step of checking whether the passenger will accept a change into the reduction mode may be added between the step S120 of determining whether a display mode of the display unit 300 is the reduction mode and the step S130 of changing the display mode into the reduction mode when it is determined that the display mode is not the reduction mode. In this case, when the passenger accepts a change from the display mode into the reduction mode, the control part 600 changes the display mode into the reduction mode.

When the vehicle is in the night driving state or enters the night driving state, a display mode of the display apparatus for a vehicle is changed into the reduction mode that is the simple mode, among the plurality of display modes. Accordingly, a danger of accident which occurs in a passenger can be reduced because light that is emitted from the display unit 300 is minimized so that the passenger can concentrate on driving.

FIG. 26 is a diagram illustrating a control flow when a vehicle is in the sports driving mode in the display apparatus for a vehicle according to an example not falling within the claimed scope of the present invention.

Referring to FIG. 26, the method of controlling a display apparatus for a vehicle according to the present example not falling within the claimed scope of the present invention may include a step S210 of determining whether a driving mode of the vehicle is the sports driving mode, a step S220 of determining whether a display mode of the display unit 300 is the reduction mode when it is determined that the driving mode of the vehicle is the sports driving mode, and a step S230 of changing the display mode into the reduction mode when it is determined that the display mode is not the reduction mode.

The step S210 of determining whether a driving mode of the vehicle is the sports driving mode may be performed by recognizing, by the control part 600, that a passenger selects the sports driving mode.

When detecting that the passenger selects the sports driving mode or the driving mode is changed into the sports driving mode, the control part 600 determines whether a display mode of the display unit 300 is the reduction mode (S220). If the display unit 300 is in the state in which the display unit 300 has not been activated, that is, an OFF state, the control part 600 terminates control of an operation of the display unit 300.

When it is determined that the display mode is not the reduction mode, the control part 600 operates the driving part 400 so that the display gear part 370 reaches the first point on the guide part 200. The control part 600 detects that the display gear part 370 reaches the first point on the guide part 200 through the first sensor part 510. When it is confirmed that the display gear part 370 has reached the first point, the control part 600 stops the operation of the driving part 400. Accordingly, a change from the display mode of the display apparatus for a vehicle to the reduction mode is completed (S230). When it is determined that the display mode is the reduction mode, the control part 600 terminates control over the operation of the driving part 400 without a need to separately drive the driving part 400.

In the method of controlling a display apparatus for a vehicle according to the present example not falling within the claimed scope of the present invention, a step of checking whether the passenger will accept a change into the reduction mode may be added between the step S220 of determining whether a display mode of the display unit 300 is the reduction mode and the step S230 of changing the display mode into the reduction mode when it is determined that the display mode is not the reduction mode. In this case, when the passenger accepts a change from the display mode to the reduction mode, the control part 600 changes the display mode into the reduction mode.

When a passenger drives a vehicle in the sports driving mode or a driving mode of the vehicle is changed into the sports driving mode, a display mode of the display apparatus for a vehicle is changed into the reduction mode that is the simple mode, among the plurality of display modes. Accordingly, light that is emitted from the display unit 300 is minimized so that the passenger can sufficiently secure a field of vision ahead of the vehicle.

FIG. 27 is a diagram illustrating a control flow when a vehicle is in the autonomous driving mode in the display apparatus for a vehicle according to an example not falling within the claimed scope of the present invention.

Referring to FIG. 27, the method of controlling a display apparatus for a vehicle according to the present example not falling within the claimed scope of the present invention may include a step S310 of determining whether a driving mode of the vehicle is the autonomous driving mode, a step S320 of determining whether a display mode of the display unit 300 is the extension mode when it is determined that the driving mode of the vehicle is the autonomous driving mode, and a step S330 of changing the display mode into the extension mode when it is determined that the display mode is not the extension mode.

The step S310 of determining whether a driving mode of the vehicle is the autonomous driving mode may be performed by recognizing, by the control part 600, that a passenger selects the autonomous driving mode.

When recognizing that the passenger selects the autonomous driving mode, the control part 600 determines whether a display mode of the display unit 300 is the extension mode (S320). If the display unit 300 is in the state in which the display unit 300 has not been activated, that is, an OFF state, the control part 600 may activate the display unit 300 and then determine whether the display mode is the extension mode.

When it is determined that the display mode is not the extension mode, the control part 600 operates the driving part 400 so that the display gear part 370 reaches the third point on the guide part 200. The control part 600 detects whether the display gear part 370 reaches the third point on the guide part 200 through the third sensor part 530. When it is confirmed that the display gear part 370 reaches the third point, the control part 600 stops the operation of the driving part 400. Accordingly, a change from the display mode of the display apparatus for a vehicle to the extension mode is completed (S330). When it is determined that the display mode is the extension mode, the control part 600 terminates control over the operation of the driving part 400 without a need to separately drive the driving part 400.

In the method of controlling a display apparatus for a vehicle according to the present invention, a step of checking whether the passenger will accept a change into the extension mode may be added between the step S320 of determining whether a display mode of the display unit 300 is the extension mode and the step S330 of changing the display mode into the extension mode when it is determined that the display mode is not the extension mode. In this case, when the passenger accepts a change from the display mode into the extension mode, the control part 600 changes the display mode into the extension mode.

When a driving mode of the vehicle is changed from a common driving mode to the autonomous driving mode, the display apparatus for a vehicle may provide cluster information and infortainment content information to a passenger in detail through the display unit 300 by changing the common driving mode into the extension mode that is the full mode, among the plurality of display modes.

FIG. 28 is a diagram illustrating a control flow when a vehicle is in the charging mode in the display apparatus for a vehicle according to an example not falling within the claimed scope of the present invention.

Referring to FIG. 28, the method of controlling a display apparatus for a vehicle according to the present example not falling within the claimed scope of the present invention may include a step S410 of determining whether a mode of the vehicle is the charging mode, a step S420 of determining whether a display mode of the display unit 300 is the extension mode when it is determined that the mode of the vehicle is the charging mode, and a step S430 of changing the display mode into the extension mode when it is determined that the display mode is not the extension mode.

The step S410 of determining whether a mode of the vehicle is the charging mode may be performed by detecting, by a charging sensor (not illustrated), that a charging cover is opened or a charger is connected to the vehicle.

When receiving an open signal or charger connection signal for the charging cover from the charging sensor, the control part 600 determines whether a display mode of the display unit 300 is the extension mode (S420). If the display unit 300 is in the state in which the display unit 300 has not been activated, that is, an OFF state, the control part 600 may activate the display unit 300 and then determine whether the display mode is the extension mode.

When it is determined that the display mode is not the extension mode, the control part 600 operates the driving part 400 so that the display gear part 370 reaches the third point on the guide part 200. The control part 600 detects that the display gear part 370 reaches the third point on the guide part 200 through the third sensor part 530. When it is confirmed that the display gear part 370 reaches the third point, the control part 600 stops the operation of the driving part 400. Accordingly, a change from the display mode of the display apparatus for a vehicle to the extension mode is completed (S430). When it is determined that the display mode is the extension mode, the control part 600 does not need to separately drive the driving part 400.

In the method of controlling a display apparatus for a vehicle according to the present example not falling within the claimed scope of the present invention, a step of checking whether a passenger will accept a change into the extension mode may be added between the step S420 of determining whether the display mode of the display unit 300 is the extension mode and the step S430 of changing the display mode into the extension mode when it is determined that the display mode is not the extension mode. In this case, when the passenger accepts a change from the display mode into the extension mode, the control part 600 changes the display mode into the extension mode.

The method of controlling a display apparatus for a vehicle according to the present example not falling within the claimed scope of the present invention may further include a step S440 of determining whether the extension mode is the cinema mode and a step S450 of executing the extension mode as the cinema mode when it is determined that the extension mode is not the cinema mode.

When a change from the display mode to the extension mode is completed, the control part 600 determines whether the extension mode is the cinema mode among several modes (S440). If the extension mode is not the cinema mode, the control part 600 executes the display mode as the cinema mode in the extension mode (S450).

When the cinema mode is executed, an image is output by the main infortainment display part 341. Accordingly, a passenger can watch various types of video including a movie and YouTube in a full screen form. If a passenger is in a situation in which the passenger does not need to drive for a long time, such as vehicle charging, as described above, control over the display apparatus for a vehicle may be performed for the relaxation of the passenger. When the cinema mode is executed, a location and angle of a seat may be adjusted in accordance with the cinema mode.

FIG. 29 is a diagram illustrating a control flow when a vehicle is in the auto camping mode in the display apparatus for a vehicle according to an example not falling within the claimed scope of the present invention.

Referring to FIG. 29, the method of controlling a display apparatus for a vehicle according to the present example not falling within the claimed scope of the present invention may include a step S510 of determining whether a mode of the vehicle is the auto camping mode, a step S520 of determining whether a display mode of the display unit 300 is the extension mode when it is determined that the mode of the vehicle is the auto camping mode, and a step S530 of changing the display mode into the extension mode when it is determined that the display mode is not the extension mode.

The step S510 of determining whether a mode of the vehicle is the auto camping mode may be performed by recognizing, by the control part 600, that a passenger selects the auto camping mode.

When recognizing that the passenger selects the auto camping mode, the control part 600 determines whether a display mode of the display unit 300 is the extension mode (S520). If the display unit 300 is in the state in which the display unit 300 has not been activated, that is, an OFF state, the control part 600 may activate the display unit 300 and then determine whether the display mode is the extension mode.

When it is determined that the display mode is not the extension mode, the control part 600 operates the driving part 400 so that the display gear part 370 reaches the third point on the guide part 200. The control part 600 detects that the display gear part 370 reaches the third point on the guide part 200 through the third sensor part 530. When it is confirmed that the display gear part 370 reaches the third point, the control part 600 stops the operation of the driving part 400. Accordingly, a change from the display mode of the display apparatus for a vehicle to the extension mode is completed (S530). When it is determined that the display mode is the extension mode, the control part 600 does not need to separately drive the driving part 400.

In the method of controlling a display apparatus for a vehicle according to the present example not falling within the claimed scope of the present invention, a step of checking whether the passenger will accept a change into the extension mode may be added between the step S520 of determining whether a display mode of the display unit 300 is the extension mode and a step S530 of changing the display mode into the extension mode when it is determined that the display mode is not the extension mode. In this case, when the passenger accepts a change from the display mode into the extension mode, the control part 600 changes the display mode into the extension mode.

The method of controlling a display apparatus for a vehicle according to the present example not falling within the claimed scope of the present invention may further include a step S540 of determining whether the extension mode is the cinema mode and a step S550 of executing the extension mode as the cinema mode when it is determined that the extension mode is not the cinema mode.

When a change from the display mode to the extension mode is completed, the control part 600 determines whether the extension mode is the cinema mode among several modes (S540). When it is determined that the extension mode is not the cinema mode, the control part 600 executes the display mode as the cinema mode in the extension mode (S550).

When the cinema mode is executed, an image is output by the main infortainment display part 341. Accordingly, a passenger can watch various types of video including a movie and YouTube in a full screen form. If a passenger uses a vehicle as another type of means other than moving means as in a situation in which the passenger stays at the vehicle as described above, control over the display apparatus for a vehicle may be performed for the relaxation of the passenger.

According to the display apparatus for a vehicle according to an example not falling within the claimed scope of the present invention, since the display unit 300 is moved in the cockpit part 100 in a swivel moving way, a space that is used to receive the display unit 300 within the cockpit part 100 can be reduced, and the utilization of an interior space of a vehicle can be improved.

Furthermore, according to an example not falling within the claimed scope of the present invention, an increase in the size of the display unit 300 can be implemented while not increasing the thickness of the cockpit part 100 because a receiving space within the cockpit part 100 can be reduced.

Furthermore, according to an example not falling within the claimed scope of the present invention, a phenomenon in which a screen is crushed or distorted can be reduced because a front surface from which various types of information or content are output in the plurality of display parts 310 is formed of a plane.

Furthermore, according to the present invention, driving convenience along with relaxation convenience can be improved because a specific mode, among a plurality of display modes, can be selected depending on a situation.

Furthermore, according to the present invention, driving convenience along with relaxation convenience can be improved and a danger of an accident can be reduced because a specific mode, among a plurality of display modes, can be selected depending on a situation.

Furthermore, according to the present invention, since the display unit can be manipulated in a contactless way, the occurrence of a health and hygiene problem, such as a virus infection attributable to direct contact with the display unit, can be reduced.

## Claims

1. A display apparatus for a vehicle, comprising:
a cockpit part (100) comprising an opening;
a guide part (200) mounted within the cockpit part (100);
a display unit (300) disposed within the cockpit part (100), movable along the guide part (200) so that the display unit (300) has a curved line-shaped moving path and configured to appear and disappear through the opening; and
a driving part (400) configured to provide electric power to the display unit (300) so that the display unit (300) is moved on the guide part (200),
wherein:
the display unit (300) comprises a plurality of display parts (310) configured to output a screen, and
the display parts (310) that neighbor each other are connected to form a set angle.

2. The display apparatus for the vehicle of claim 1, wherein:
the display unit (300) is movable along the guide part (200) so that the display unit (300) comes from and goes to a plurality of points on the guide part (200), and
a protruding height of the display unit (300) that protrudes to an outside through the opening is different at each of the plurality of points.

3. The display apparatus for the vehicle of claim 1 or 2, wherein the display unit (300) further comprises:
a display bracket part (350) configured to support the display part; and
a display gear part (370) rotatably mounted on the display bracket part (350) and movable along the guide part (200) while being rotated by the driving part (400).

4. The display apparatus for the vehicle of any one of claims 1 to 3, wherein each of the plurality of display parts (310) comprises:
a first display part (320) formed to have a first upper and lower width (L1) and configured to protrude to the outside through the opening when the display gear part (370) reaches a first point on the guide part (200);
a second display part (330) connected to a bottom of the first display part (320), formed to have a second upper and lower width (L2), and configured to protrude to the outside through the opening when the display gear part (370) reaches a second point on the guide part (200); and
a third display part (340) connected to a bottom of the second display part (330), formed to have a third upper and lower width (L3), and configured to protrude to the outside through the opening when the display gear part (370) reaches a third point on the guide part (200).

5. The display apparatus for the vehicle of claim 3 or 4, wherein the guide part (200) comprises:
a guide body part (210) mounted on the cockpit part (100) and formed to have a curved surface toward a passenger seat (C); and
a guide gear part (220) having a gear formed along the curved surface of the guide body part (210) so that a path of the display gear part (370) is formed and the guide gear part (220) is engaged with the display gear part (370).

6. The display apparatus for the vehicle of claim 5, further comprising:
a sensor part (500) disposed in the guide body part (210) in a plural number along the guide gear part (220) and configured to detect a location of the display unit (300); and
a control part (600) configured to control an operation of the driving part (400) in response to a detection signal from the plurality of sensor parts (500).

7. The display apparatus for the vehicle of claim 6, wherein the control part (600) is configured to
enable the first display part (320) to protrude to the outside through the opening, and the second display part (330) and the third display part (340) to be disposed within the cockpit part (100) by driving and controlling the display gear part (370) so that the display gear part (370) reaches a first point on the guide part (200) when receiving a reduction mode command,
enable the first display part (320) and the second display part (330) to protrude to the outside through the opening, and the third display part (340) to be disposed within the cockpit part (100) by driving and controlling the display gear part (370) so that the display gear part (370) reaches a second point on the guide part (200) when receiving a standard mode command, and
enable the first display part (320) and the second display part (330) and the third display part (340) to protrude to the outside through the opening by driving and controlling the display gear part (370) so that the display gear part (370) reaches a third point on the guide part (200) when receiving an extension mode command.

8. The display apparatus for the vehicle of claim 1, further comprising:
an air gesture detection part installed in the cockpit part (100) and configured to detect a movement of a passenger; and
a control part (600) configured to control an operation of the display unit (300) in response to a gesture signal from the air gesture detection part.

9. The display apparatus for the vehicle of claim 8, wherein the air gesture detection part comprises:
an air sensor part (760) configured to scan a movement of the passenger; and
an air gesture recognition part (770) configured to recognize an air gesture corresponding to the movement of the passenger,
wherein the control part (600) is configured to control an operation of a display screen of the display unit (300) in response to the air gesture recognized by the air gesture recognition part (770).

10. The display apparatus for the vehicle of claim 8 or 9, wherein the air gesture detection part comprises:
a first air gesture detection part (710) installed at a top of the cockpit part (100) through which the display unit (300) appears and disappears;
a second air gesture detection part (720) installed on a front surface of the cockpit part (100) so that the second air gesture detection part (720) is closer to a passenger than the first air gesture detection part (710); and
a third air gesture detection part (730) installed in a central partition part of the cockpit part (100).

11. A method of controlling a display apparatus for a vehicle in which a protruding height of a display unit (300) that protrudes to an outside through an opening of a cockpit part (100) based on a plurality of display modes is adjusted in multiple stages, the method comprising:
determining (S10) whether a start-up of the vehicle has become on;
activating the display unit (300) when it is determined that the start-up of the vehicle has become on;
determining (S20) whether the display mode of the activated display unit (300) is a standard mode; and
changing (S30) the display mode into the standard mode when it is determined that the display mode is not the standard mode,
wherein the plurality of display modes comprises:
the standard mode;
a reduction mode in which a protruding height of the display unit (300) is smaller than a protruding height of the display unit (300) in the standard mode; and
an extension mode in which a protruding height of the display unit (300) is greater than the protruding height of the display unit (300) in the standard mode.

12. The method of controlling the display apparatus for the vehicle of claim 11, wherein the display unit (300) comprises:
a first display part (320) formed to have a first upper and lower width (L1) and configured to protrude to the outside through the opening in the reduction mode, the standard mode, and the extension mode;
a second display part (330) connected to a bottom of the first display part (320), formed to have a second upper and lower width (L2), and configured to protrude to the outside through the opening only in the standard mode and the extension mode; and
a third display part (340) connected to the bottom of the second display part (330), formed to have a third upper and lower width (L3), and configured to protrude to the outside through the opening only in the extension mode.

13. The method of controlling the display apparatus for the vehicle of claim 12, wherein:
a screen area that is formed by the first display part (320) and the second display part (330) that have protruded to the outside through the opening in the standard mode comprises a standard cluster display part and a standard infotainment display part,
the standard cluster display part is disposed on one side of the screen area and configured to display at least any one of a driving environment, navigation information, and a speedometer in a graphic form, and
the standard infotainment display part is disposed on other side of the screen area and configured to display infortainment content in a graphic form.

## Patentansprüche

1. Anzeigevorrichtung für ein Fahrzeug, umfassend:
ein Cockpitteil (100), das eine Öffnung umfasst;
ein Führungsteil (200), das innerhalb des Cockpitteils (100) montiert ist;
eine Anzeigeeinheit (300), die innerhalb des Cockpitteils (100) angeordnet ist, entlang des Führungsteils (200) bewegbar ist, sodass die Anzeigeeinheit (300) einen gekrümmten, linienförmigen Bewegungspfad aufweist, und so eingerichtet ist, dass sie durch die Öffnung erscheint und verschwindet; und
ein Antriebsteil (400), das so eingerichtet ist, dass es der Anzeigeeinheit (300) elektrische Energie zuführt, sodass die Anzeigeeinheit (300) auf dem Führungsteil (200) bewegt wird,
wobei:
die Anzeigeeinheit (300) eine Mehrzahl von Anzeigeteilen (310) umfasst, die so eingerichtet sind, dass sie einen Bildschirm ausgeben, und
die einander benachbarten Anzeigeteile (310) so verbunden sind, dass sie einen festgelegten Winkel bilden.

2. Anzeigevorrichtung für das Fahrzeug nach Anspruch 1, wobei:
die Anzeigeeinheit (300) entlang des Führungsteils (200) bewegbar ist, sodass die Anzeigeeinheit (300) von einer Mehrzahl von Punkten auf dem Führungsteil (200) kommt und zu diesen geht, und
eine hervorstehende Höhe der Anzeigeeinheit (300), die durch die Öffnung zu einer Außenseite hervorsteht, an jedem der Mehrzahl von Punkten unterschiedlich ist.

3. Anzeigevorrichtung für das Fahrzeug nach Anspruch 1 oder 2, wobei die Anzeigeeinheit (300) ferner umfasst:
ein Anzeigehalterungsteil (350), das so eingerichtet ist, dass es das Anzeigeteil stützt; und
ein Anzeigegetriebeteil (370), das drehbar an dem Anzeigehalterungsteil (350) montiert ist und entlang des Führungsteils (200) bewegbar ist, während es von dem Antriebsteil (400) gedreht wird.

4. Anzeigevorrichtung für das Fahrzeug nach einem der Ansprüche 1 bis 3, wobei jedes der Mehrzahl von Anzeigeteilen (310) umfasst:
ein erstes Anzeigeteil (320), das so ausgebildet ist, dass es eine erste obere und untere Breite (L1) aufweist, und so eingerichtet ist, dass es durch die Öffnung zur Außenseite hervorsteht, wenn das Anzeigegetriebeteil (370) einen ersten Punkt auf dem Führungsteil (200) erreicht;
ein zweites Anzeigeteil (330), das mit einer Unterseite des ersten Anzeigeteils (320) verbunden ist, so ausgebildet ist, dass es eine zweite obere und untere Breite (L2) aufweist, und so eingerichtet ist, dass es durch die Öffnung zur Außenseite hervorsteht, wenn das Anzeigegetriebeteil (370) einen zweiten Punkt auf dem Führungsteil (200) erreicht; und
ein drittes Anzeigeteil (340), das mit einer Unterseite des zweiten Anzeigeteils (330) verbunden ist, so ausgebildet ist, dass es eine dritte obere und untere Breite (L3) aufweist, und so eingerichtet ist, dass es durch die Öffnung zur Außenseite hervorsteht, wenn das Anzeigegetriebeteil (370) einen dritten Punkt auf dem Führungsteil (200) erreicht.

5. Anzeigevorrichtung für das Fahrzeug nach Anspruch 3 oder 4, wobei das Führungsteil (200) umfasst:
ein Führungskörperteil (210), das an dem Cockpitteil (100) montiert ist und so ausgebildet ist, dass es eine gekrümmte Oberfläche in Richtung eines Passagiersitzes (C) aufweist; und
ein Führungsgetriebeteil (220), das eine Verzahnung aufweist, die entlang der gekrümmten Oberfläche des Führungskörperteils (210) ausgebildet ist, sodass ein Pfad des Anzeigegetriebeteils (370) gebildet wird und das Führungsgetriebeteil (220) mit dem Anzeigegetriebeteil (370) in Eingriff steht.

6. Anzeigevorrichtung für das Fahrzeug nach Anspruch 5, ferner umfassend:
ein Sensorteil (500), das in einer Mehrzahl in dem Führungskörperteil (210) entlang des Führungsgetriebeteils (220) angeordnet ist und so eingerichtet ist, dass es eine Position der Anzeigeeinheit (300) erfasst; und
ein Steuerteil (600), das so eingerichtet ist, dass es einen Betrieb des Antriebsteils (400) in Reaktion auf ein Erfassungssignal von der Mehrzahl von Sensorteilen (500) steuert.

7. Anzeigevorrichtung für das Fahrzeug nach Anspruch 6, wobei das Steuerteil (600) eingerichtet ist zum:
Ermöglichen, dass das erste Anzeigeteil (320) durch die Öffnung zur Außenseite hervorsteht und das zweite Anzeigeteil (330) und das dritte Anzeigeteil (340) innerhalb des Cockpitteils (100) angeordnet sind, indem das Anzeigegetriebeteil (370) so angetrieben und gesteuert wird, dass das Anzeigegetriebeteil (370) einen ersten Punkt auf dem Führungsteil (200) erreicht, wenn ein Reduzierungsmodus-Befehl empfangen wird,
Ermöglichen, dass das erste Anzeigeteil (320) und das zweite Anzeigeteil (330) durch die Öffnung zur Außenseite hervorstehen und das dritte Anzeigeteil (340) innerhalb des Cockpitteils (100) angeordnet ist, indem das Anzeigegetriebeteil (370) so angetrieben und gesteuert wird, dass das Anzeigegetriebeteil (370) einen zweiten Punkt auf dem Führungsteil (200) erreicht, wenn ein Standardmodus-Befehl empfangen wird, und
Ermöglichen, dass das erste Anzeigeteil (320), das zweite Anzeigeteil (330) und das dritte Anzeigeteil (340) durch die Öffnung zur Außenseite hervorstehen, indem das Anzeigegetriebeteil (370) so angetrieben und gesteuert wird, dass das Anzeigegetriebeteil (370) einen dritten Punkt auf dem Führungsteil (200) erreicht, wenn ein Erweiterungsmodus-Befehl empfangen wird.

8. Anzeigevorrichtung für das Fahrzeug nach Anspruch 1, ferner umfassend:
ein Luftgesten-Erfassungsteil, das in dem Cockpitteil (100) installiert ist und so eingerichtet ist, dass es eine Bewegung eines Passagiers erfasst; und
ein Steuerteil (600), das so eingerichtet ist, dass es einen Betrieb der Anzeigeeinheit (300) in Reaktion auf ein Gestensignal von dem Luftgesten-Erfassungsteil steuert.

9. Anzeigevorrichtung für das Fahrzeug nach Anspruch 8, wobei das Luftgesten-Erfassungsteil umfasst:
ein Luftsensorteil (760), das so eingerichtet ist, dass es eine Bewegung des Passagiers abtastet; und
ein Luftgesten-Erkennungsteil (770), das so eingerichtet ist, dass es eine der Bewegung des Passagiers entsprechende Luftgeste erkennt,
wobei das Steuerteil (600) so eingerichtet ist, dass es einen Betrieb eines Bildschirms der Anzeigeeinheit (300) in Reaktion auf die durch das Luftgesten-Erkennungsteil (770) erkannte Luftgeste steuert.

10. Anzeigevorrichtung für das Fahrzeug nach Anspruch 8 oder 9, wobei das Luftgesten-Erfassungsteil umfasst:
ein erstes Luftgesten-Erfassungsteil (710), das an einer Oberseite des Cockpitteils (100) installiert ist, durch welches die Anzeigeeinheit (300) erscheint und verschwindet;
ein zweites Luftgesten-Erfassungsteil (720), das an einer Vorderseite des Cockpitteils (100) installiert ist, sodass sich das zweite Luftgesten-Erfassungsteil (720) näher an einem Passagier befindet als das erste Luftgesten-Erfassungsteil (710); und
ein drittes Luftgesten-Erfassungsteil (730), das in einem zentralen Trennwandteil des Cockpitteils (100) installiert ist.

11. Verfahren zum Steuern einer Anzeigevorrichtung für ein Fahrzeug, bei dem eine hervorstehende Höhe einer Anzeigeeinheit (300), die durch eine Öffnung eines Cockpitteils (100) basierend auf einer Mehrzahl von Anzeigemodi zur Außenseite hervorsteht, in mehreren Stufen eingestellt wird, wobei das Verfahren umfasst:
Bestimmen (S10), ob ein Startvorgang des Fahrzeugs eingeschaltet wurde;
Aktivieren der Anzeigeeinheit (300), wenn bestimmt wird, dass der Startvorgang des Fahrzeugs eingeschaltet wurde;
Bestimmen (S20), ob der Anzeigemodus der aktivierten Anzeigeeinheit (300) ein Standardmodus ist; und
Ändern (S30) des Anzeigemodus in den Standardmodus, wenn bestimmt wird, dass der Anzeigemodus nicht der Standardmodus ist,
wobei die Mehrzahl von Anzeigemodi umfasst:
den Standardmodus;
einen Reduzierungsmodus, in dem eine hervorstehende Höhe der Anzeigeeinheit (300) geringer ist als eine hervorstehende Höhe der Anzeigeeinheit (300) im Standardmodus; und
einen Erweiterungsmodus, in dem eine hervorstehende Höhe der Anzeigeeinheit (300) größer ist als die hervorstehende Höhe der Anzeigeeinheit (300) im Standardmodus.

12. Verfahren zum Steuern der Anzeigevorrichtung für das Fahrzeug nach Anspruch 11, wobei die Anzeigeeinheit (300) umfasst:
ein erstes Anzeigeteil (320), das so ausgebildet ist, dass es eine erste obere und untere Breite (L1) aufweist, und so eingerichtet ist, dass es in dem Reduzierungsmodus, dem Standardmodus und dem Erweiterungsmodus durch die Öffnung zur Außenseite hervorsteht;
ein zweites Anzeigeteil (330), das mit einer Unterseite des ersten Anzeigeteils (320) verbunden ist, so ausgebildet ist, dass es eine zweite obere und untere Breite (L2) aufweist, und so eingerichtet ist, dass es nur in dem Standardmodus und dem Erweiterungsmodus durch die Öffnung zur Außenseite hervorsteht; und
ein drittes Anzeigeteil (340), das mit der Unterseite des zweiten Anzeigeteils (330) verbunden ist, so ausgebildet ist, dass es eine dritte obere und untere Breite (L3) aufweist, und so eingerichtet ist, dass es nur in dem Erweiterungsmodus durch die Öffnung zur Außenseite hervorsteht.

13. Verfahren zum Steuern der Anzeigevorrichtung für das Fahrzeug nach Anspruch 12, wobei:
ein Bildschirmbereich, der durch das erste Anzeigeteil (320) und das zweite Anzeigeteil (330), die in dem Standardmodus durch die Öffnung zur Außenseite hervorstehen, gebildet wird, ein Standard-Kombiinstrument-Anzeigeteil und ein Standard-Infotainment-Anzeigeteil umfasst,
das Standard-Kombiinstrument-Anzeigeteil auf einer Seite des Bildschirmbereichs angeordnet ist und so eingerichtet ist, dass es mindestens eines von einer Fahrumgebung, Navigationsinformationen und einem Tachometer in einer grafischen Form anzeigt, und
das Standard-Infotainment-Anzeigeteil auf der anderen Seite des Bildschirmbereichs angeordnet ist und so eingerichtet ist, dass es Infotainment-Inhalte in einer grafischen Form anzeigt.

## Revendications

1. Appareil d'affichage pour un véhicule, comprenant:
une partie poste de conduite (100) comprenant une ouverture;
une partie de guidage (200) montée à l'intérieur de la partie poste de conduite (100);
une unité d'affichage (300) disposée à l'intérieur de la partie poste de conduite (100), mobile le long de la partie de guidage (200) de telle sorte que l'unité d'affichage (300) ait un trajet de déplacement en forme de ligne incurvée et est conçue pour apparaître et disparaître à travers l'ouverture; et
une partie d'entraînement (400) conçue pour alimenter l'unité d'affichage (300) en électricité de sorte que l'unité d'affichage (300) puisse se déplacer sur la partie de guidage (200),
dans lequel:
l'unité d'affichage (300) comprend une pluralité de parties affichage (310) conçues pour afficher un écran, et
les parties d'affichage (310) qui sont voisines les unes des autres sont reliées pour former un angle défini.

2. Appareil d'affichage pour le véhicule selon la revendication 1, dans lequel:
l'unité d'affichage (300) est mobile le long de la partie de guidage (200) de telle sorte que l'unité d'affichage (300) provient et se déplace vers une pluralité de points sur la partie de guidage (200), et
la hauteur de saillie de l'unité d'affichage (300) qui fait saillie vers l'extérieur à travers l'ouverture est différente à chacun de la pluralité des points.

3. Appareil d'affichage pour le véhicule selon la revendication 1 ou 2, dans lequel l'unité d'affichage (300) comprend en outre:
une partie de support d'affichage (350) conçue pour supporter la partie affichage; et
une partie roue dentée d'affichage (370) montée en rotation sur la partie de support d'affichage (350) et mobile le long de la partie de guidage (200) tout en étant entraînée en rotation par la partie d'entraînement (400).

4. Appareil d'affichage pour le véhicule selon l'une quelconque des revendications 1 à 3, dans lequel chacune de la pluralité de parties affichage (310) comprend:
une première partie affichage (320) formée pour avoir une première largeur supérieure et inférieure (L1) et conçue pour faire saillie vers l'extérieur à travers l'ouverture lorsque la partie route dentée d'affichage (370) atteint un premier point sur la partie de guidage (200);
une deuxième partie affichage (330) reliée à la partie inférieure de la première partie affichage (320), formée de manière à présenter une deuxième largeur supérieure et inférieure (L2), et conçue pour faire saillie vers l'extérieur à travers l'ouverture lorsque la partie route dentée d'affichage (370) atteint un deuxième point sur la partie de guidage (200); et
une troisième partie affichage (340) reliée à une partie inférieure de la deuxième partie affichage (330), formée de manière à présenter une troisième largeur supérieure et inférieure (L3), et conçue pour faire saillie vers l'extérieur à travers l'ouverture lorsque la partie route dentée d'affichage (370) atteint un troisième point sur la partie de guidage (200).

5. Appareil d'affichage pour le véhicule selon la revendication 3 ou 4, dans lequel la partie de guidage (200) comprend:
une partie de corps de guidage (210) montée sur la partie poste de conduite (100) et formée de manière à présenter une surface incurvée en direction d'un siège passager (C); et
une partie roue dentée de guidage (220) comportant une roue dentée formée le long de la surface incurvée de la partie corps de guidage (210) de manière à former un chemin pour la partie route dentée d'affichage (370) et la partie route dentée de guidage (220) s'engrenant avec la partie roue dentée d'affichage (370).

6. Appareil d'affichage pour le véhicule selon la revendication 5, comprenant en outre:
plusieurs parties capteur (500) disposées dans la partie corps de guidage (210) le long de la partie roue dentée de guidage (220) et conçue pour détecter un emplacement de l'unité d'affichage (300); et
une partie de commande (600) conçue pour commander le fonctionnement de la partie d'entraînement (400) en réponse à un signal de détection provenant de la pluralité de parties capteur (500).

7. Appareil d'affichage selon la revendication 6, dans lequel le partie de commande (600) est conçue pour:
permettre à la première partie affichage (320) de faire saillie vers l'extérieur à travers l'ouverture, et à la deuxième partie affichage (330) et à la troisième partie affichage (340) d'être disposées à l'intérieur de la partie poste de conduite (100) en entraînant et en commandant la partie route dentée d'affichage (370) de telle sorte que la partie roue dentée d'affichage (370) atteigne un premier point sur la partie de guidage (200) lors de la réception d'une instruction de mode réduction,
permettre à la première partie affichage (320) et à la deuxième partie affichage (330) de faire saillie vers l'extérieur à travers l'ouverture, et à la troisième partie affichage (340) d'être disposée à l'intérieur de la partie poste de conduite (100) en entraînant et en commandant la partie route dentée d'affichage (370) de telle sorte que la partie route dentée d'affichage (370) atteigne un deuxième point sur la partie de guidage (200) lors de la réception d'une instruction de mode standard, et
permettre à la première partie affichage (320), à la deuxième partie affichage (330) et à la troisième partie affichage (340) de faire saillie vers l'extérieur à travers l'ouverture en entraînant et en commandant la partie roue dentée d'affichage (370) de telle sorte que la partie roue dentée d'affichage (370) atteigne un troisième point sur la partie de guidage (200) lors de la réception d'une instruction de mode extension.

8. Appareil d'affichage pour le véhicule selon la revendication 1, comprenant en outre:
une partie de détection de gestes installée dans la partie poste de conduite (100) et configurée pour détecter les mouvements d'un passager; et
une partie de commande (600) configurée pour commander le fonctionnement de l'unité d'affichage (300) en réponse à un signal gestuel provenant de la partie de détection de gestes.

9. Appareil d'affichage pour le véhicule selon la revendication 8, dans lequel la partie détection de gestes comprend:
une partie capteur (760) configuré pour balayer les mouvements du passager; et
une partie de reconnaissance de gestes (770) configurée pour reconnaître un geste correspondant au mouvement du passager,
dans lequel la partie de commande (600) est configurée pour commander le fonctionnement d'un écran d'affichage de l'unité d'affichage (300) en réponse au geste reconnu par la partie de reconnaissance de gestes (770).

10. Appareil d'affichage pour le véhicule selon la revendication 8 ou 9, dans lequel la partie détection de gestes comprend:
une première partie de détection de gestes (710) installée sur la partie supérieure de la partie poste de conduite (100) à travers laquelle l'unité d'affichage (300) apparaît et disparaît;
une deuxième partie de détection de gestes (720) installée sur une face avant de la partie poste de conduite (100) de manière à ce que la deuxième partie de détection de gestes (720) soit plus proche d'un passager que la première partie de détection de gestes (710); et
une troisième partie de détection de gestes (730) installée dans une partie centrale de séparation de la partie poste de conduite (100).

11. Procédé de commande d'un appareil d'affichage pour un véhicule dans lequel la hauteur de saillie d'une unité d'affichage (300) qui fait saillie vers l'extérieur à travers une ouverture d'une partie de poste de conduite (100) est réglée en plusieurs étapes en fonction d'une pluralité de modes d'affichage, le procédé comprenant:
le fait de déterminer (S10) si le démarrage du véhicule a été activé;
l'activation de l'unité d'affichage (300) lorsqu'il est déterminé que le démarrage du véhicule est activé;
le fait de déterminer (S20) si le mode d'affichage de l'unité d'affichage activée (300) est un mode standard; et
le passage (S30) du mode d'affichage en mode standard lorsqu'il est déterminé que le mode d'affichage n'est pas le mode standard,
dans lequel la pluralité de modes d'affichage comprend:
le mode standard;
un mode de réduction dans lequel la hauteur de saillie de l'unité d'affichage (300) est inférieure à la hauteur de saillie de l'unité d'affichage (300) dans le mode standard; et
un mode d'extension dans lequel la hauteur de saillie de l'unité d'affichage (300) est supérieure à la hauteur de saillie de l'unité d'affichage (300) dans le mode standard.

12. Procédé de commande de l'appareil d'affichage pour le véhicule selon la revendication 11, dans lequel l'unité d'affichage (300) comprend:
une première partie affichage (320) formée pour avoir une première largeur supérieure et inférieure (L1) et conçue pour faire saillie vers l'extérieur à travers l'ouverture en mode réduction, en mode standard et en mode extension;
une deuxième partie affichage (330) reliée à la partie inférieure de la première partie affichage (320), formée de manière à présenter une deuxième largeur supérieure et inférieure (L2), et conçue pour faire saillie vers l'extérieur à travers l'ouverture uniquement en mode standard et en mode extension; et
une troisième partie d'affichage (340) reliée à la partie inférieure de la deuxième partie d'affichage (330), formée de manière à avoir une troisième largeur supérieure et inférieure (L3), et conçue pour faire saillie vers l'extérieur à travers l'ouverture uniquement en mode extension.

13. Procédé de commande de l'appareil d'affichage pour le véhicule selon la revendication 12, dans lequel:
une zone d'écran formée par la première partie affichage (320) et la deuxième partie affichage (330) qui ont fait saillie vers l'extérieur à travers l'ouverture en mode standard comprend une partie d'affichage de groupe standard et une partie d'affichage d'infodivertissement standard,
la partie affichage de groupe standard est disposée sur un côté de la zone d'écran et conçue pour afficher au moins l'un parmi l'environnement de conduite, les informations de navigation et un compteur de vitesse sous forme graphique, et
la partie affichage d'infodivertissement standard est disposée de l'autre côté de la zone d'écran et conçue pour afficher le contenu d'infodivertissement sous forme graphique.
